# EUROPEAN PATENT SPECIFICATION

(11) **EP 3 131 076 B1**
(45) Date of publication and mention of the grant of the patent: **19.12.2018**
(21) Application number: 14888940.5
(22) Date of filing: 09.04.2014
(51) Int. Cl.: G08B 13/196, G08B 25/00, H04W 4/02, H04W 4/12

(54) **DIGITAL LOSS/ACCIDENT DEFENSE SYSTEM, METHOD, AND PROGRAM**
DIGITALES SICHERHEITSSYSTEM ZUM SCHUTZ VOR VERLUST/UNFALL, VERFAHREN UND PROGRAMM
SYSTÈME, PROCÉDÉ ET PROGRAMME NUMÉRIQUES DE DÉFENSE CONTRE LES PERTES/ACCIDENTS

(43) Date of publication of application: 15.02.2017
(73) Proprietor: Technomirai Co., Ltd, Tokyo 169-0075 (JP)
(72) Inventor: MIWA, Kazuo, Tokyo 169-0075 (JP)
(74) Representative: Appelt, Christian W.
(86) International application number: PCT/JP2014/060254
(87) International publication number: WO 2015/155847

(56) References cited:
- JP-A- 2002 230 654
- JP-A- 2002 230 654
- JP-A- 2009 245 078
- JP-A- 2011 018 094
- JP-A- 2011 018 094
- JP-A- 2011 227 619
- JP-A- 2013 210 927
- US-A1- 2007 294 207

## Description

### [Technical Field]

The present invention relates to a digital loss/accident defense system, method, and a program for preventing pilferage in a back area of a commercial facility or the like by monitoring a video shot by a monitoring camera.

### [Background Art]

Because of the demand for convenience and consumption preferences due to the diversification of society, the business categories of commercial retail are changing. For example, convenience stores, supermarkets, malls, department stores, etc., and category killers including drug stores, home centers, consumer electronics/book centers, and clothing specialty stores have been developed to become higher in the composition of customer support and sales, and the frequency of customer use has been increasing year by year.

To commercial facilities, a variety of creative efforts and measures such as measures against competing stores, and intense effort and competition for an increase in revenue and profit have been forced in the assortment of items, quality, prices, volumes, etc., in order to achieve an increase in the number of customer introductions and a higher sales frequency.

In a commercial facility, a large number of customers come to sales floors, and in its back area (hereinafter, appropriately referred to also as a "back facility"), persons in charge of delivery operations of a large amount of merchandise and delivery operators, employees, and part-timers access a kitchen, a warehouse, a break room, an office room, etc., of the back-sales-floor facility at all times. At a store exit to the outside, a security guard(s) performs monitoring, but with the number of security guards, a sufficient response by monitoring is not feasible for an area that includes all the kitchen, warehouse, break room, and office room of the back facility where customers are not allowed access. Therefore, a cash loss accident from an office room/cashier's office room and theft of merchandise using a vehicle in a concealed manner with delivery operators in a warehouse or cargo handling area have occurred.

Those other than persons in charge are not allowed to enter the cargo handling area, warehouse, break room, and office room/ cashier' s office room of the back facility. But, it is difficult during ordinary operations that a responsible person (s) or a security guard (s) monitor all activities at all times. Under the present circumstances, a large number of persons including persons in charge of delivery operators, part-timers, and part-timers for stocking shelves with merchandise after hours are moving about. Management to prohibit entry into a restricted zone in a back facility and means to cope with actual entry are still not sufficient. From that perspective, a security system for actions such as warning the person in question and reporting to a security guard and/or a responsible person in real time is necessary.

The flow of operation when supplying merchandise to a commercial facility includes unloading the merchandise in a truck yard, inspecting the merchandise, temporarily keeping the merchandise in stock at a cargo handling yard until a delivery to warehouses, and delivering at any time to warehouses by persons in charge of merchandise. The merchandise is temporarily kept at the cargo handling yard before being stored in a warehouse by the person in charge of merchandise. Neither a person exclusively engaged in inspection nor a security guard is sometimes present there because of the operations, and during that period of time, cases occur in which a large number of merchandise loaded on a cart in a warehouse or cargo handling area is stolen by using a vehicle or the like. A method of manned guards by having a plurality of security guards on duty at all times is employed, but the security guards have operations other than being on guard such as telephone communication and front desk duties, and because also of a physiological response or the like, it is difficult for them to monitor all activities. Moreover, the back facility is opened or closed to the outside by a shutter. But, when a plurality of merchandise are delivered to cause frequent access, the shutter is kept open the whole time and the monitoring cannot be thoroughly performed, so the measures against cases such as theft and loss are not sufficient.

Moreover, it is also often the case that a person engaged in inspection, personnel required for merchandise handling, or a security guard is not on duty at all times at the cargo handling yard, and it is also often the case that the truck yard and the cargo handling yard face each other and are not partitioned at all times by a wall, a shutter, or the like. In this case, damage from the theft of a large amount of merchandise together with the cart in a concealed manner with delivery operators of clients occurs, and which has caused a huge amount of loss to the company like shoplifting. Guards are still not sufficient despite a monitoring camera(s) and security personnel.

Even when stolen merchandise is loaded on a truck, situations cannot be determined without manned monitoring as matters stand, so a defense system against the case in which stolen merchandise is carried out and transported by a truck is still insufficient.

In addition to the above monetary loss, there are also concerns for social worries. Examples thereof that can be mentioned are tampering at corporate workplaces and information management at production sites.

Entry of outsiders to laboratories for corporate product development, factories at production sites, and cooking areas for preparing food has been strictly prohibited and controlled. Providing layers of guards by, for example, a monitoring camera(s), infrared rays, fingerprint authentication, and manned management has improved security quality. However, costs required therefor are on the increase. It is in fact difficult to manage employees including the whole range of their activities, and recent cases also prove that the management is still insufficient.

Against information leakage, theft, tampering, etc., by human acts that occur in companies, preventing entry of outsiders from the outside has been strictly managed by various methods etc., described above, however, information leakage, theft, tampering, etc., by human acts that occur within companies are difficult to be managed because unlike the entry from the outside, permitted persons can gain access. The fact is that the internal management is not real-time management. Therefore, a case such as information leakage, theft, or tampering in a company is known under some circumstances at a later date after the occurrence and is then investigated. But, clear-cut facts as to who made contact and when contact was made are unclear, so the security management at the occurrence of the case or before the case occurs is not sufficient.

JP 2011-233133 A describes a shoplifting prevention system at a gate of which a monitoring camera is provided and which acquires face information from a received image, refers to face information saved in a storage device, and displays a screen showing the position of shooting in the store if a person corresponding to the face information has been shot.

JP 2008-257487 A describes a shoplifting detection system applying face authentication that informs a store attendant by an alarm that an intruder has come to the store through face recognition.

US 2007/294207 A1 discloses a data indexing system and method including acquiring activity data in a context and indexing the activity data in accordance with contextual conditions. The activity data is stored in accordance with indices . An event is correlated with the activity data by using the indices to review the activity data in the context.

JP 2011 018094 A discloses a patrol support system for supporting a patrol guard to perform patrol guard including a person monitoring means for detecting a person included in a video from video data photographed by a photographing means arranged in a prescribed guard region, and for monitoring the detected person, a suspicious person detection means for detecting a person satisfying predetermined detection conditions as a suspicious person from persons monitored by the person monitoring means, a location information calculation means for calculating the relative location information of the suspicious person detected by the suspicious person detection means with the patrol guard and a suspicious person information transmission means for transmitting prescribed information to a portable terminal carried by the patrol guard based on the relative location information calculated by the location information calculation mean.

JP 2002 230654 A discloses a remote monitoring system provided with a monitoring camera photographing inside an office and outputting a video signal, and a monitor computer determining whether or not a suspicious character is photographed in a picture formed by imaging the video signal and, when determining that the suspicious character is photographed, transmitting an electronic mail describing the intrusion of the suspicious character to a portable telephone via Internet circuit.

### [Summary of Invention]

### [Technical Problem]

However, in such a conventional back facility monitoring system, as in the foregoing, an effective defense has not been taken for the occurrence of a cash loss accident at an office room/cashier's office room of the back facility and damage from the theft of a large amount of merchandise together with the cart by using a vehicle in a concealed manner with delivery operators in a warehouse or cargo handling area.

For example, at the back of a commercial facility, a large number and amount of merchandise is delivered before hours to warehouses for each article of merchandise in the area of cargo unloading, inspection, delivery, and cargo handling by delivery vehicles' coming and leaving a truck yard. Because there are many and different types of operations such as carrying out empty carts after a delivery of merchandise by corresponding delivery operators, it is difficult to monitor the back facility at all times. Moreover, employees of the commercial facility are busily occupied with their operations such as placing orders of merchandise, waiting on customers on sales floors, stocking shelves with merchandise on sales floors, and displaying merchandise in order to secure sales and profit, and for deliveries of merchandise and sales floor operations such as stocking shelves and displays on sales floors, the back facility becomes lax in management and is in an unmanned state for a significant amount of time. Theft and the like have occurred in the meantime.

It is an object of the present invention to provide a digital loss/accident defense system and method, and a program capable of preventing an act of theft and the like in advance by monitoring behavior of a suspicious person in real time in a surveillance target area such as a back facility.

### [Solution to Problem]

A digital loss/accident defense system according to the present invention is for preventing an act by a suspicious person by monitoring a video shot by a monitoring camera installed so as to cover a surveillance target area being a staff-only area where unauthorized entry is prohibited, and comprises positional information acquiring means for acquiring positional information of mobile terminal devices a plurality of employees respectively carry with them throughout the surveillance target area, face image storing means for accumulating a face image of an authenticated person, face authentication collating means for collating a face image of a person shot by the monitoring camera with the face image accumulated in the face image storing means, and control means for, if a result of collation by the face authentication collating means is a non-match with an authenticated person's face image, determining him/her as a suspicious person, determining a position of the mobile terminal device closest to the suspicious person based on the positional information acquired from the positional information acquiring means, and transmitting information regarding the suspicious person to said mobile terminal device.

Also, the face image storing means further accumulates a face image of a suspicious person, and if a result of collation by the face authentication collating means is a match with a suspicious person's face image, the control means transmits information regarding the suspicious person to the mobile terminal device closest to the suspicious person, which allows immediately determining a suspicious person in a surveillance target area such as a back facility, and preventing an act of theft and the like in advance by monitoring behavior of the suspicious person in real time.

Also, the digital loss/accident defense system comprises an RFID reader installed in the surveillance target area and an authentication card to be authenticated by the RFID reader, and if authentication of the authentication card possessed by a person in the surveillance target area by the RFID reader is not established, the control means determines him/her as a suspicious person, and transmits information regarding the suspicious person to the mobile terminal device closest to the suspicious person, which allows determining a person to be a suspicious person even if his/her face cannot be recognized in a surveillance target area such as a back facility, and preventing an act of theft and the like in advance by monitoring behavior of the suspicious person in real time.

Also, the control means determines if a person authenticated in the surveillance target area is gaining access to a specific place in the surveillance target area or at a previously specified time, and if the authenticated person is not permitted access to the specific place or at the specified time, determines the person as a suspicious person, which allows monitoring access of a person who is not a suspicious person in a surveillance target area such as a back facility but is a person without permission to access a specific place or at a previously specified time, so the security level in preventing an act of theft, tampering, leaking information, or the like can be increased.

The digital loss/accident defense system comprises a vehicle stopper device that restricts a vehicle's movement, and the control means activates the vehicle stopper device if a vehicle driven by the suspicious person tries to drive out of the surveillance target area, which allows hindering a suspicious vehicle that is trying to flee from a surveillance target area such as a back facility, so an act of theft and the like can be more strongly prevented.

Also, the control means according to the present invention is characterized by, if an answer-back of response-inability is returned from the mobile terminal device, determining a position of the mobile terminal device the second closest to the suspicious person, and transmitting the information regarding the suspicious person to said mobile terminal device, which allows an employee carrying a mobile terminal device located the second closest to the suspicious person with him/her to respond thereto promptly even if an employee carrying a mobile terminal device located closest to him/her is unable to respond thereto because of stocking shelves or physiological reasons. Employees may go to a warehouse or go to the bathroom, and thus do not always stay in fixed positions, and therefore, a case is considered in which reporting to an employee to whom a report is to be made is not feasible. Such a situation can be dealt with.

Also, if a predetermined time has elapsed after transmitting the information regarding the suspicious person to the mobile terminal device, the control means determines a position of the mobile terminal device the second closest to the suspicious person, and transmits the information regarding the suspicious person to said mobile terminal device, which allows an employee carrying a mobile terminal device located the second closest to the suspicious person with him/her to respond thereto promptly even if an employee carrying a mobile terminal device located closest is not aware thereof because of noise or the like of the sales floor.

Also, according to the present invention, the information regarding the suspicious person includes information of a position of the suspicious person and a positon of a mobile terminal device to which the information has been transmitted overlapped on the surveillance target area, which allows an employee having received the information to promptly recognize the position of the suspicious person on the scene. In this case, including a face image of the suspicious person allows an employee having received the information to promptly identify the intruder or the like on the scene by looking at his/her face.

A digital loss/accident defense security method of the present invention is for preventing an act by a suspicious person by monitoring a video shot by a monitoring camera installed so as to cover a surveillance target area being a staff-only area where unauthorized entry is prohibited, and comprises a positional information acquiring step of acquiring positional information of mobile terminal devices a plurality of employees respectively carry with them throughout the surveillance target area, a face image storing step of accumulating a face image of an authenticated person, a face authentication collating step of collating a face image of a person shot by the monitoring camera with the face image accumulated in the face image storing step, and a control step of, if a result of collation by the face authentication collating step is a non-match with an authenticated person's face image, determining him/her as a suspicious person, determining a position of the mobile terminal device closest to the suspicious person based on the positional information acquired from the positional information acquiring means, and transmitting information regarding the suspicious person to said mobile terminal device.

Also, the present invention is a program for causing a computer to function as a digital loss/accident defense system for preventing an act by a suspicious person by monitoring a video shot by a monitoring camera installed so as to cover a surveillance target area being a staff-only area where unauthorized entry is prohibited, including positional information acquiring means for acquiring positional information of mobile terminal devices a plurality of employees respectively carry with them throughout the surveillance target area, face image storing means for accumulating a face image of an authenticated person, face authentication collating means for collating a face image of a person shot by the monitoring camera with the face image accumulated in the face image storing means, and control means for, if a result of collation by the face authentication collating means is a non-match with an authenticated person's face image, determining him/her as a suspicious person, determining a position of the mobile terminal device closest to the suspicious person based on the positional information acquired from the positional information acquiring means, and transmitting information regarding the suspicious person to said mobile terminal device.

### [Advantageous Effects of Invention]

According to the present invention, an act of theft and the like can be prevented in advance by monitoring behavior of a suspicious person in real time in a surveillance target area such as a back facility.

### [Brief Description of Drawings]

Fig. 1 is a block diagram showing a configuration of a digital loss/accident defense system according to an embodiment of the present invention.
Fig. 2 is a block diagram of a control unit of a monitoring device of the digital loss/accident defense system according to the embodiment of the present invention.
Fig. 3 is a flowchart showing a registration processing of persons by the control unit of the monitoring device of the digital loss/accident defense system according to the embodiment of the present invention.
Fig. 4 is a flowchart showing a registration processing of a back facility layout by the control unit of the monitoring device of the digital loss/accident defense system according to the embodiment of the present invention.
Fig. 5 is a flowchart showing a monitoring control processing of the monitoring device of the digital loss/accident defense system according to the embodiment of the present invention.
Fig. 6 is a flowchart showing a monitoring control processing of the monitoring device of the digital loss/accident defense system according to the embodiment of the present invention.
Fig. 7A is a view showing information on a suspicious person and a back facility layout to be transmitted to an employee present at a closest position of the digital loss/accident defense system according to the embodiment of the present invention.
Fig. 7B is a view showing detailed information on a suspicious person to be transmitted to an employee present at a closest position of the digital loss/accident defense system according to the embodiment of the present invention.
Fig. 8 is a flowchart showing a monitoring control processing of a mobile terminal device of the digital loss/accident defense system according to the embodiment of the present invention.
Fig. 9A is a view showing an example of a back facility layout of the digital loss/accident defense system according to the embodiment of the present invention.
Fig. 9B is a view showing an example of a back facility layout of the digital loss/accident defense system according to the embodiment of the present invention.
Fig. 10A is a view showing an example of a back facility layout of the digital loss/accident defense system according to the embodiment of the present invention.
Fig. 10B is a view showing an example of a back facility layout of the digital loss/accident defense system according to the embodiment of the present invention.

### [Description of Embodiments]

Hereinafter, modes for carrying out the present invention will be described in detail with reference to the accompanying drawings.

### (Embodiment)

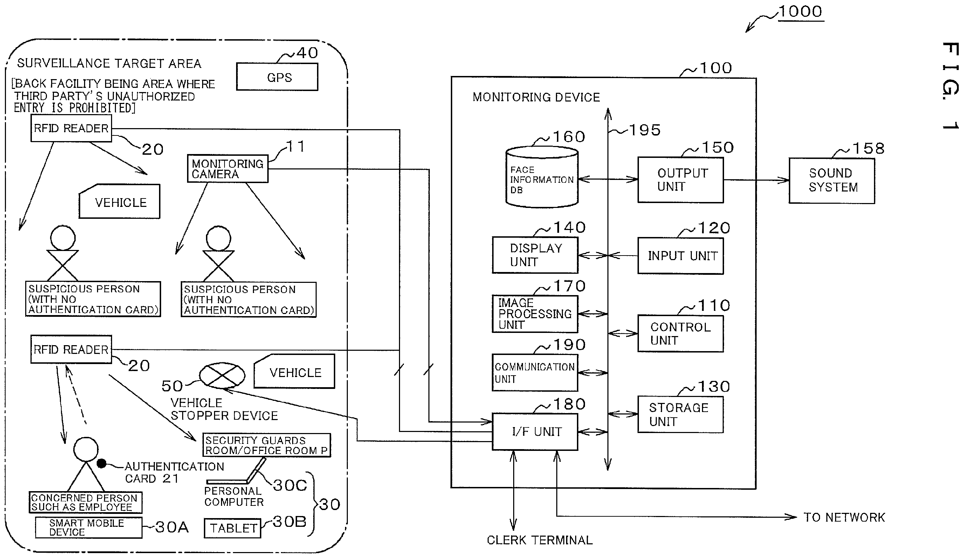

Fig. 1 is a block diagram showing a configuration of a digital loss/accident defense system according to an embodiment of the present invention.

As shown in Fig. 1, the digital loss/accident defense system 1000 comprises a plurality of monitoring cameras 11 installed on a ceiling or the like of a surveillance target area, a plurality of RFID (Radio Frequency IDentification) readers 20 installed in the surveillance target area such as a back facility being a staff-only area including a truck yard where unauthorized entry is prohibited, an authentication card 21 that a concerned person such as an employee (hereinafter, also referred to as an "employee") carries with him/her and the RFID reader 20 authenticates, a mobile terminal device 30 that the employee carries with him/her, a GPS (Global Positioning System) 40 that captures the position of the employee in the surveillance target area, a vehicle stopper device 50, and a monitoring device 100 that controls the system as a whole.

The digital loss/accident defense system 1000 is a system that monitors a video shot by the monitoring camera 11 installed so as to cover the surveillance target area such as a back facility being a staff-only area including a truck yard where unauthorized entry is prohibited, for preventing an act of theft, tampering, or leaking information by a suspicious person.

### <Monitoring camera 11>

The monitoring cameras 11 are cameras for authentication that shoot persons' faces. The monitoring cameras 11 are installed at various positions in the surveillance target area such as a back facility being a staff-only area including a truck yard where unauthorized entry is prohibited, and shoot persons' faces. Images shot by the monitoring cameras 11 are output to the monitoring device 100. The monitoring camera 11 may shoot a moving image at all times, or may shoot a single still image every certain period of time (for example, a few seconds).

### <RFID reader 20>

The RFID reader 20 is, generally, for managing the settlement or the like of a commodity with an RF tag by detecting whether there is an answer-back in response to a transmission to the RF tag attached to the commodity. In addition, the RF tag is removed from or disabled in an article having been brought into a state of being able to be rightfully taken out of the store by being purchased or the like.

In the present embodiment, the RFID reader 20 authenticates the authentication card 21 that an employee possesses. The RFID reader 20 captures a position of the employee carrying the authentication card 21 with him/her by the authentication of the authentication card 21 that the employee possesses.

Also, in the present embodiment, a person and vehicle driver who does not possess the authentication card 21 despite being shot by the monitoring camera 11 is identified as a "suspicious person" or a suspicious vehicle driver.

In addition, in the present embodiment, there is an example of the authentication card 21 using an RFID authentication card that performs authentication with the RFID reader 20, but the authentication card may be by any authentication means. Also, the authentication card 21 is merely referred to as being in a card shape for convenience of description, and may not necessarily be in a card shape to be an authentication tag or the like.

### <Mobile terminal device 30>

The mobile terminal devices 30 are respectively carried by a plurality of employees with them. Examples of the mobile terminal devices 30 are smartphones 30a, tablets 30b, and notebook PCs 30c. Other examples of the mobile terminal devices 30 are mobile telephones, PHS (Personal Handy-Phone System) phones, PDAs (Personal Digital Assistants), and dedicated terminals. In the present embodiment, the mobile terminal device 30 can be used by each employee at a variety of locations (that is, current position), and can receive an e-mail message, a video including a moving image, or the like from the monitoring device 100 via a telephone line (not shown) .

In the present embodiment, the mobile terminal devices 30 are used as the smartphones 30a or the tablets 30b, and each individual can use the same at a variety of locations (that is, current position). One of the mobile terminal devices 30 is disposed at headquarters/a head office (not shown).

The mobile terminal device 30 may have a configuration including the GPS 40 that captures the position of the employee.

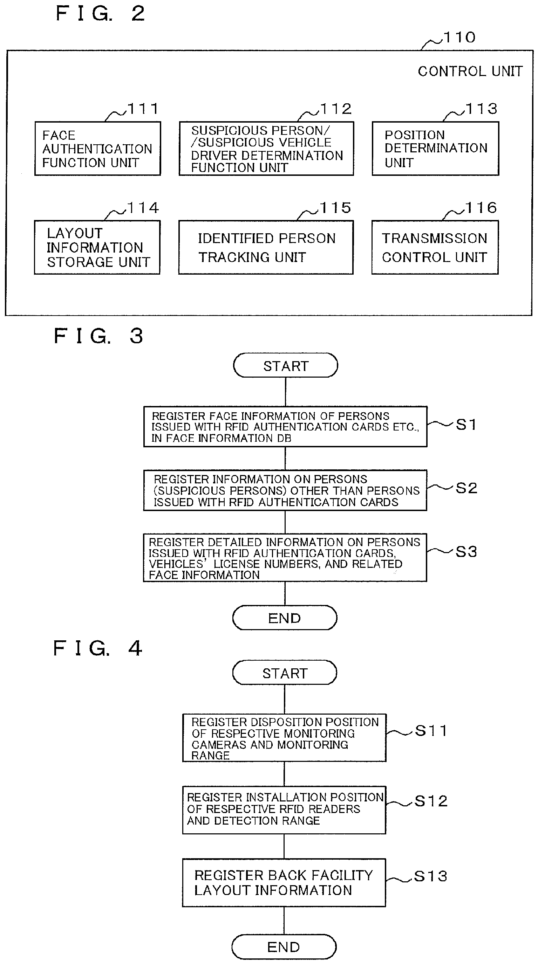

Also, the mobile terminal device 30 includes a response-inability setting unit (response-inability setting means, not shown) that presets not being able to answer back to information transmitted from a control unit 110 (refer to Fig. 2) of the monitoring device 100 to be described later. The mobile terminal device 30, when response-inability has been set by the response-inability setting unit, returns an answer-back of said response-inability if transmission of information is received from the control unit 110 of the monitoring device 100.

### <GPS 40>

The GPS 40 receives radio waves of positional information from a GPS satellite or the like. The GPS 40 calculates, from information received via a GPS antenna, current positional information as three parameters of the latitude, longitude, and altitude to acquire positional information. The acquired positional information is transmitted on a timely basis to the monitoring device 100.

In addition, in the present embodiment, the example using a GPS satellite has been mentioned as a means for acquiring positional information, but it may be a system other than the GPS using a positional relationship with a base station. For example, when an Android (registered trademark) smartphone or a highly functional mobile phone with a camera is used as the mobile terminal device 30 being a mobile terminal, it is also possible to acquire current positional information of its own terminal through approach checking by performing transmission/reception of information with a mobile phone company server via a base station and mobile telephone communication network (not shown) used in place of GPS 40 or in combination therewith.

Also, positional information acquisition by Wi-Fi positioning, that is, positional information acquisition using a Wi-Fi access point and a predetermined positional information service may be used.

### <Vehicle stopper device 50>

The vehicle stopper device 50 is a vehicle stopper function unit consisting of a flap or rod-shaped member that stands up from the road surface in accordance with a control signal from the monitoring device 100. The vehicle stopper device 50 has a function of, when a person identified as a suspicious vehicle driver tries to drive out of the surveillance area, being activated by the monitoring device 100 and hindering the suspicious vehicle's driving away therefrom. Also, the above-described flap or rod-shaped member may be connected or interlocked to a chain or gate.

### [Monitoring device 100]

The monitoring device 100 is installed in, for example, a control room of the store, and provides centralized control for the surveillance target area in the store. The monitoring device 100 may be a common server computer, a personal computer, or the like.

The monitoring device 100 comprises a control unit 110 (control means), an input unit 120, a storage unit 130, a display unit 140, an output unit 150, a face information database (DB) 160 (face image storing means), an image processing unit 170, an interface (I/F) unit 180, and a communication unit 190, and the respective units are connected by a bus 195.

When it has been detected that a person being a suspicious person (hereinafter, appropriately referred to as a "specific person") has showed up at the store, the monitoring device 100 notifies information on this person and store information to the headquarters/head office and a security company system through a network.

In the following, when the subject is described as "the XX unit," the control unit 110 reads out respective programs from a ROM as needed and then loads the same in a RAM, and executes respective functions (described later). The respective programs may be stored in advance in the storage unit 130, or may be taken into the monitoring device 100 when necessary via another storage medium or communication medium.

The control unit 110 is formed by a CPU (Central Processing Unit) or the like, and controls the monitoring device 100 as a whole and executes a monitoring program to function as a digital loss/accident defense system. A detailed configuration of the control unit 110 will be described later.

The input unit 120 is an input device for a user of the monitoring device 100 to input instructions and the like to the monitoring device 100, such as a keyboard, a mouse, a touch panel provided on a screen of the display unit 140, and a microphone.

The storage unit 130 stores still and/or moving images received from the monitoring cameras 11 and various data, programs, etc., to be used by the control unit 110.

The display unit 140 displays images received from the monitoring cameras 11, a GUI (Graphical User Interface) to operate the monitoring device 100, etc., including operating conditions of the monitoring device 100.

The output unit 150 is, for example, an audio interface, and outputs to a sound system 158 in the store a sound signal from the monitoring device 100. The sound signal to be output from the monitoring device 100 to the sound system 158 may be, for example, a sound signal input via a voice input device such as a microphone provided in the input unit 120 or a sound signal of music data stored in the storage unit 130 that is played by the control unit 110. The sound system 158 comprises an amplifier and a plurality of speakers disposed in the store, and makes an announcement in the store of a sound signal input from the monitoring device 100.

The face information DB 160 accumulates face images (face information) of suspicious persons and store concerned persons, etc.

The image processing unit 170 performs a predetermined processing to a received image. Examples of the predetermined processing include contour extraction, image resizing, and resolution converting processing.

Also, the image processing unit 170 performs image processing such as applying a red or yellow frame to a face image to be transmitted to the employee's mobile terminal device 30.

The I/F unit 180 connects each monitoring camera 11 disposed in the surveillance target area and the monitoring device 100. Also, the I/F unit 180 connects with each RFID reader 20 disposed in the surveillance target area, and sends out an authentication result of the authentication card 21 an employee who approached the RFID reader 20 possesses to the monitoring device 100. Also, the I/F unit 180 connects to the headquarters/head office, security company, and the like (not shown) by a network or dedicated line. As basic data such as persons' faces registered in the face information DB 160, data is acquired from the headquarters/head office, security company, and the like (not shown) via the I/F unit 180 to construct the face information DB 160. Also, exchanging information with the headquarters/head office, security company, and the like (not shown) can update each other's face information DBs to ones of the latest face images (face information). In addition, the security company is not an essential structural element of the digital loss/accident defense system according to the present embodiment.

The communication unit 190 transmits/receives data with respect to the mobile terminal device 30 via a base station. In the present embodiment, the communication unit 190 receives positional information of each mobile terminal device 30 every certain period of time from the mobile terminal device 30 via the base station, and when a suspicious person is recognized, transmits information (such an e-mail message or a video including a moving image) regarding the suspicious person.

### [Control unit 110]

Fig. 2 is a block diagram of the control unit 110 of the monitoring device 100 of the digital loss/accident defense system according to the embodiment of the present invention.

As shown in Fig. 2, the control unit 110 comprises a face authentication function unit 111 (face authentication collating means), a suspicious person/suspicious vehicle driver determination function unit 112 that determines a suspicious person or suspicious vehicle driver, a position determination unit 113 (positional information acquiring means) that determines the position of a suspicious person and an employee, a layout information storage unit 114 that stores layout information of the surveillance target area, an identified person tracking unit 115 that tracks an identified person, and a transmission control unit 116 that, based on acquired positional information, transmits information regarding the suspicious person preferentially to a mobile terminal device 30 closest to the suspicious person.

If a result of collation by the face authentication function unit 111 is a match (a non-match with an authenticated person' s face image, or a match with a suspicious person' s face image), the control unit 110 determines the position of a mobile terminal device 30 closest to the suspicious person the collation result with whom is a match based on the positional information acquired from the position determination unit 113, and transmits information regarding the suspicious person to the mobile terminal device 30.

If a predetermined time has elapsed after transmitting the information regarding the suspicious person to the mobile terminal device 30 or an answer-back of response-inability is returned from the response-inability setting unit, the control unit 110 determines the position of a mobile terminal device 30 the second closest to the suspicious person the collation result with whom is a match, and transmits the information regarding the suspicious person to the mobile terminal device 30.

Here, the information regarding the suspicious person includes information of the position of the suspicious person and the position of the employee overlapped on the surveillance target area. The information regarding the suspicious person includes a face image of the suspicious person present in the surveillance target area.

### <Face authentication function unit 111>

The face authentication function unit 111 performs face authentication to determine whether the face of a person included in an image received from the monitoring camera 11 is any of the persons' faces registered in the face information DB 160. The face authentication can be performed based on similarity of face information extracted from a received image to the face information registered in the face information DB 160. Specifically, if the face information includes template images, similarity between the template images can be determined.

Also, the face authentication function unit 111 acquires, from face regions, information representing humans' facial characteristics (face information) to be used for face authentication, and registers the information in the face information database (DB) 160 associated with the individual images. Also, the face authentication function unit 111 receives persons' images transmitted from the headquarters (not shown) and registers the images in the face information DB 160.

In the present embodiment, the face authentication function unit 111 registers the following face information and related information.
- Registration of persons issued with RFID authentication cards
- Registration of store concerned persons etc.
- Registration of employee concerned persons etc.
And, in some cases,
- Registration of persons other than those registered with RFID authentication cards
- Registration of faces of suspicious persons or suspicious vehicle drivers

In the present embodiment, the face authentication function unit 111 registers face images of persons authenticated in the surveillance target area such as a back facility. The present digital loss/accident defense system is a system that monitors incoming and outgoing suspicious persons in a surveillance target area such as a back facility. Face information of suspicious persons or suspicious vehicle drivers can be accumulated to some extent beforehand, but it is difficult to have accumulated face information of all suspicious persons. If a mode is employed in which only the face information of suspicious persons is collated for authentication, an act of theft and the like by an overlooked suspicious person cannot be prevented, so the present digital loss/accident defense system cannot be made effective.

Therefore, in the present embodiment, face images of persons (persons issued with RFID authentication cards, store concerned persons, employee concerned persons, etc.) authenticated in the surveillance target area such as a back facility are registered, and when a face image of a person who accesses the surveillance target area such as a back facility does not match any of the registered person's face images, the person is determined to be a suspicious person. Also, the face authentication function unit 111 in combination also performs registering face images of suspicious persons, and can in this case immediately determine a suspicious person by an authentication collation of the face images of suspicious persons.

### <Suspicious person/suspicious vehicle driver determination function unit 112>

### (Surveillance target area)

The suspicious person/suspicious vehicle driver determination function unit 112, if a person or vehicle driver who does not possess the authentication card 21 enters the surveillance target area such as a back facility being a staff-only area including a truck yard where unauthorized entry is prohibited, determines the person or vehicle driver to be a suspicious person or a suspicious vehicle driver. Specifically, the suspicious person/suspicious vehicle driver determination function unit 112 registers persons issued with the authentication cards 21 (RFID authentication cards), and if a person or vehicle driver other than the registered persons with the authentication cards 21 (RFID authentication cards) is detected in the surveillance target area, determines the person or vehicle driver to be a suspicious person or a suspicious vehicle driver. Here, the registration with the authentication cards 21 (RFID authentication cards) includes registration of employees and store concerned persons, etc.

### (Access-restricted area)

Also, even among non-suspicious persons, that is, persons who possess the authentication cards 21, depending on the intended use and work type of each workplace, the office room, or each room and/or the degree of information, it is sometimes wished to set access concerned persons for a corresponding surveillance target area so as to allow only permitted concerned persons to access the area. The suspicious person/suspicious vehicle driver determination function unit 112 can perform such a detailed determination according to the work purpose or the like. The suspicious person/suspicious vehicle driver determination function unit 112, when room access control that specifies access concerned persons has been set, hands over the determination processing to the face authentication function unit 111. In this case, the face authentication function unit 111 recognizes by face recognition whether being a person whose access to a specific area or the like has been permitted, and if the person has not obtained permission, performs processing regarding him/her as a quasi-suspicious person.

### (Scheduled access restriction)

Also, even among non-suspicious persons, that is, persons who possess the authentication cards 21, it is sometimes wished to allow concerned persons' access only at certain times in accordance with an operation schedule including predetermined days of the week and hours. The suspicious person/suspicious vehicle driver determination function unit 112 can perform such a detailed determination according to the operation schedule or the like. The suspicious person/suspicious vehicle driver determination function unit 112, if the access is outside of the operation schedule, hands over the determination processing to the face authentication function unit 111. In this case, the face authentication function unit 111 recognizes by face recognition whether being a person who has obtained permission for his/her unscheduled access, and if the person has not obtained permission, performs processing regarding him/her as a quasi-suspicious person.

In addition, the suspicious person/suspicious vehicle driver determination function unit 112 is also capable of determining not a suspicious vehicle driver but possibly the suspicious vehicle itself in combination with the suspicious vehicle driver. In this case, the suspicious person/suspicious vehicle driver determination function unit 112 makes a collation based on whether the vehicle's license plate is any of the previously registered vehicle license plates.

### <Position determination unit 113>

The position determination unit 113 acquires positional information of employees in the surveillance target area by GPS positional information or the RFID readers 20. Specifically, the position determination unit 113 acquires positional information of an employee in the surveillance target area through authentication of the authentication tag that the employee carries with him/her by the plurality of RFID readers 20 installed in the surveillance target area. In this case, when an employee approaches each RFID reader 20, the position determination unit 113 determines that the employee is in proximity to the corresponding RFID reader 20 through authentication by each RFID reader 20 of the authentication card 21 that the employee carries with him/her. Because the installation position of the RFID readers 20 has been registered in advance in the layout information storage unit 114, the position of the employee can be determined.

Also, the position determination unit 113 acquires positional information from a GPS function unit included in the mobile terminal device 30.

### <Layout information storage unit 114>

The layout information storage unit 114 registers in advance surveillance area layout information based on the positon of the monitoring cameras 11, the installation position of the RFID readers 20, the area name, etc.

### <Identified person tracking unit 115>

The identified person tracking unit 115 detects a person identified to be a suspicious person by tracking with the plurality of monitoring cameras 11, and checks a movement history in the surveillance target area. The identified person tracking unit 115 tracks movement of the suspicious person, and if the suspicious person distances himself/herself from the position of the closest mobile terminal device 30 by a predetermined distance, transmits information regarding the suspicious person to another mobile terminal device 30.

### <Transmission control unit 116>

If a result of collation by the face authentication function unit 111 is a match (a non-match with an authenticated person' s face image, or a match with a suspicious person's face image), the transmission control unit 116 determines the position of a mobile terminal device 30 closest to the suspicious person the collation result with whom is a match based on the positional information acquired from the position determination unit 113, and transmits information regarding the suspicious person to the mobile terminal device 30.

Although the details will be described later, the transmission control unit 116 transmits to an employee closest to the position of a suspicious person a sound/a moving image/positional information of the suspicious person (information of a layout having marking thereon) by e-mail. In the case of a multi-floored facility, the closeness is determined on a floor to floor basis. Also, the transmission is performed in a distinguishable manner with, for example, a red display of a person showing habitual suspicious behavior and with, for example, a yellow display of a mere suspicious person.

If there is no answer-back signal from the employee to whom the transmission was addressed even after an elapse of a predetermined time (for example, five seconds), the transmission control unit 116 chooses a second employee concerned person to perform a re-transmission to him/her. The second employee concerned person is (1) a concerned person such as an employee who is the second closest to the suspicious person, (2) a security guard, a store manager, an assistant store manager, (3) the headquarters/head office, or the like.

Hereinafter, the operation of the digital loss/accident defense system configured as described above will be described.

First, description will be given of a basic concept of the digital loss/accident defense system.
(1) At the back of a commercial facility, a large number and amount of merchandise is delivered to a truck yard in and out of business hours, and by delivery vehicles' coming and leaving there, delivered to warehouses for each article of merchandise in the area of cargo unloading, inspection, delivery, and cargo handling. Because there are many and different types of operations of carrying-out by delivery operators, it is difficult to monitor empty carts after a delivery of merchandise in the back facility at all times. Moreover, employees of the commercial facility are busy with their operations such as placing orders of merchandise, waiting on customers on sales floors, stocking shelves with merchandise on sales floors, and displaying merchandise in order to secure sales and profit. For deliveries of merchandise and sales floor operations such as stocking shelves and displays on sales floors, the back facility is not sufficiently managed and is even in an unmanned state for a significant amount of time. Theft and the like are considered to have occurred in the meantime.
   The present digital loss/accident defense system prevents an act of theft by monitoring access of a suspicious person to the back facility and behavior of the suspicious person in real time.
(2) The back facility of a commercial facility is guarded by a person engaged in inspection and about two or three security guards. Because of the manned guarding, the back facility can be placed under guard at the time of security patrol, but cannot be placed under guard when no guard is on patrol. Also, there is a limit to guarding the warehouse of each section, cargo handling area, and truck yard with limited manpower, and even an intrusion by a third party cannot be noticed under the present circumstances. For preventing theft, it is important not to allow access of any person other than a person in charge of the section or a concerned person who has obtained permission.
   Also, the office room includes an accounting office room where money is handled. In the accounting office room, there is usually an employee(s), but in some cases, he/she may not be present in the accounting office room for some reason or theft may occur by an intruder entering from the outside even when there is an employee(s). Further, there is even a case that theft occurs during open hours.
   The present digital loss/accident defense system catches a sign of intrusion into the accounting office room where money is handled to make defense.
(3) In the back facility, there is a large amount of merchandise and items. Also, a large number of employees, different types of part-time workers, and client concerned persons who perform operations such as delivery, sorting, stock keeping, and stocking shelves and return of such a large amount of merchandise gain access thereto. It is difficult in practice to perform monitoring of persons who access the cargo handling area, aisles, and warehouses through sole manned management by a person engaged in inspection and security guards.

The present digital loss/accident defense system prevents theft and the like by monitoring the back facility as a whole, for persons other than those concerned of each section, in their access, without interference with ordinary operations.

Next, description will be given of the operation of the digital loss/accident defense system.

### [Registration processing]

First, a registration processing of various information of the digital loss/accident defense system will be described.

Fig. 3 is a flowchart showing a registration processing of persons by the control unit 110 of the monitoring device 100 of the digital loss/accident defense system. The present flow is executed by the control unit 110 (Fig. 2) of the monitoring device 100.

In step S1, the face authentication function unit 111 of the control unit 110 registers face information of persons issued with RFID authentication cards, store concerned persons, employee concerned persons, etc., in the face information DB 160. Specifically, the face authentication function unit 111 acquires, from face regions, information representing humans' facial characteristics (face information) to be used for face authentication, and registers the information in the face information DB 160 associated with the individual images. Also, the face authentication function unit 111 receives persons' images transmitted from the headquarters (not shown) and registers the images in the face information DB 160.

In step S2, the face authentication function unit 111 of the control unit 110 registers, in the face information DB 160, face information of persons other than the registered persons who possess the authentication cards 21 to be authenticated by the RFID readers 20. The persons other than the registered persons with the authentication cards 21 are suspicious persons or suspicious vehicle drivers. These suspicious persons also include persons showing habitual suspicious behavior. Examples of the persons showing habitual suspicious behavior are persons who often appear at the scene of a theft and persons informed in advance as marked persons from the headquarters/head office, security company, or the like. In the present embodiment, a higher level of monitoring is employed for the persons showing habitual suspicious behavior. In addition, the registration of persons' face information may be by updating a face information DB from the headquarters/head office, security company, or the like.

In step S3, the control unit 110 performs registration of detailed information, vehicles' license numbers, and related information on the persons issued with RFID authentication cards, store concerned persons, employee concerned persons, etc.

Next, a registration processing of a surveillance area layout of the digital loss/accident defense system will be described.

Fig. 4 is a flowchart showing a registration processing of a back facility layout (surveillance target area) by the control unit 110 of the monitoring device 100 of the digital loss/accident defense system. The present flow is executed by the control unit 110 (Fig. 2) of the monitoring device 100.

In step S11, the layout information storage unit 114 of the control unit 110 registers the disposition position of the respective monitoring cameras 11 and the surveillance target area such as a back facility being a staff-only area including a truck yard where unauthorized entry is prohibited.

In step S12, the layout information storage unit 114 of the control unit 110 registers the installation position of the respective RFID readers 20 and the surveillance target area such as a back facility being a staff-only area including a truck yard where unauthorized entry is prohibited.

Examples of the back facility include a "truck yard entrance/exit," a "cargo unloading and inspection area, cargo handling area, warehouses, and refrigerator/freezer," and an "office room and money accounting office room." The back facility layout can be arbitrarily set (step S13).

### [Monitoring control of monitoring device 100]

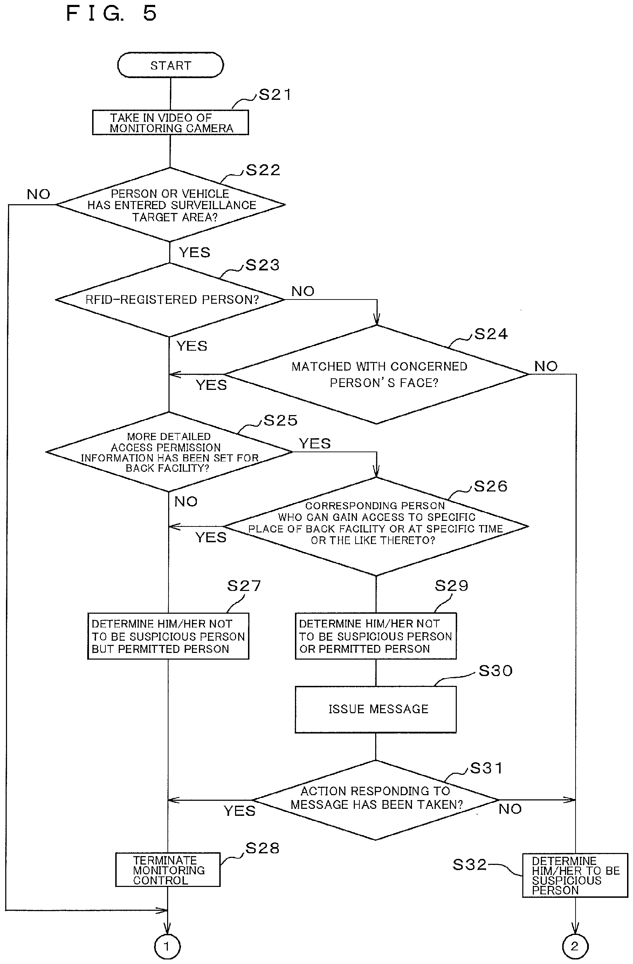

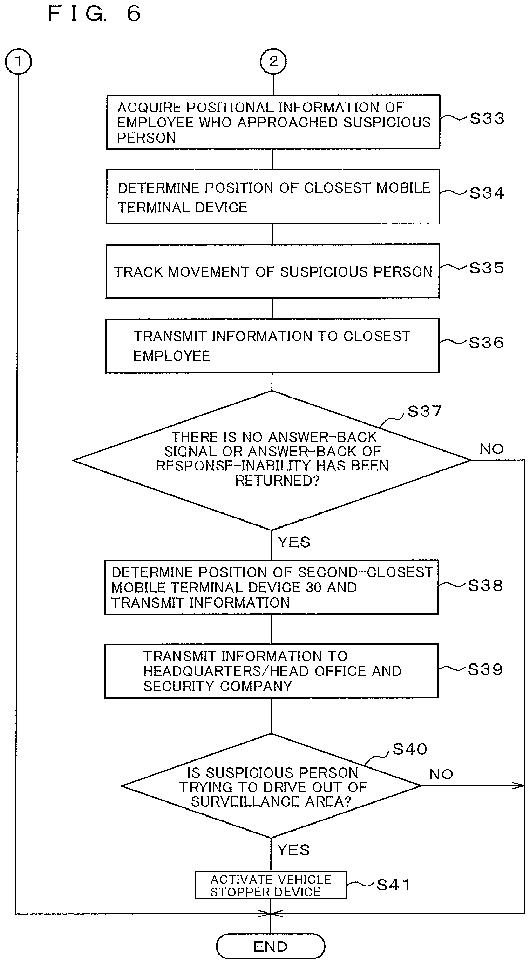

Fig. 5 and Fig. 6 are flowcharts showing a monitoring control processing of the monitoring device 100 of the digital loss/accident defense system. Fig. 6 is a flow following the connection terminal in Fig. 5. The present flow is executed mainly by the control unit 110 (Fig. 2) of the monitoring device 100.

First, in step S21, the control unit 110 takes in a video of the monitoring camera 11.

In step S22, the control unit 110 determines, based on the video shot by the monitoring camera 11 in a surveillance target area such as a back facility being a staff-only area including a truck yard where unauthorized entry is prohibited, whether a person, vehicle driver, or vehicle has entered the surveillance target area such as a back facility. The "entered the surveillance target area" means a case where a person, vehicle driver, or vehicle has made a new entry this time after a previous determination processing was performed. A variety of persons and vehicles enter/exit or move back and forth to and from the surveillance target area such as a back facility. A person (s) and vehicle (s) an authentication and determination processing of which have been finished by the present flow is excluded from the present determination processing. Here, it can be determined that a vehicle has entered the surveillance target area such as a back facility by executing a pattern recognition processing that compares an image shot before with a current image. The control unit 110 ends the present flow if a person, vehicle driver, or vehicle is not in the surveillance target area such as a back facility.

If a certain person, vehicle driver, or vehicle is in the surveillance target area such as a back facility, the suspicious person/suspicious vehicle driver determination function unit 112 determines in step S23 whether the person, vehicle driver, or vehicle is a person, vehicle driver, or vehicle which possesses the authentication card 21. At respective locations in the back facility such as a truck yard, the RFID readers 20 are installed together with the monitoring cameras 11. Similar to the installation position of the monitoring cameras 11, the locations where the respective RFID readers 20 are installed have been registered in advance as back facility layout information. When a person who carries the authentication card 21 with him/her approaches the RFID reader 20, an authentication processing is started between the RFID reader 20 and the authentication card 21 by the suspicious person/suspicious vehicle driver determination function unit 112. Based on the establishment of authentication, it is determined that the person who approached the RFID reader 20 is a previously registered person, that is, here, a store concerned person, a delivery operator, its driver, or the like. Because authentication is not established if the person is a person or vehicle driver who does not possess the authentication card 21 to be authenticated by the RFID reader 20, suspicious persons and suspicious vehicle drivers can be determined by the RFID readers 20 disposed at respective locations in the back facility.

If a certain person, vehicle driver, or vehicle enters the surveillance target area such as a back facility and authentication is established between the RFID readers 20 and the authentication card 21, the processing proceeds to step S25 based on a judgment that there is no possibility of a suspicious person in the surveillance target area.

If it is not a person or vehicle driver who possesses the authentication card 21 in the above-described step S23, the face authentication function unit 111 of the control unit 110 performs face authentication of collating a face image of the person shot by the monitoring camera 11 with the face images of employees such as registered persons with RFID authentication cards, and employee concerned persons registered in advance in step S24. Also, the face authentication function unit 111, if having registered faces of suspicious persons/suspicious vehicle drivers in the face information DB 160, performs an authentication collation of the shot person' s face image with the face images of suspicious persons/suspicious vehicle drivers. If a suspicious person or suspicious vehicle driver has been previously perceived, having registered a face image of the suspicious person or the like as a person showing habitual suspicious behavior and making the collation allows more clearly or promptly determining that the suspicious person or the like has intruded into the back facility. However, it is considered that registering face images of suspicious persons/suspicious vehicle drivers in advance is difficult or insufficient in many cases.

Therefore, in the present embodiment, employed is a mode of determining whether a face image of a person shot by the monitoring camera 11 in the surveillance target area such as a back facility matches any of the face images of employees such as store concerned persons, registered persons with RFID authentication cards, and employee concerned persons, and if the face image does not match any thereof, determining the person to be a suspicious person uniformly at this point in time. Also in this case, if face images of suspicious persons/suspicious vehicle drivers have been registered in advance, being a suspicious person/suspicious vehicle driver can be immediately determined. Also, the control unit 110 makes a collation whether the license plate of a vehicle in a shot video is any of the previously registered vehicle license plates to thereby determine that the vehicle in the surveillance target area such as a back facility is a suspicious vehicle driver's vehicle.

In the above-described step S24, if the shot person's face image matches any of the previously registered employees' face images (in the case of a match as a result of a face authentication collation), the processing proceeds to step S25 based on a judgment that the person in the surveillance target area is an appropriate person. On the other hand, if the shot person's face image does not match any of the previously registered employees' face images (in the case of a non-match as a result of a face authentication collation), the processing proceeds to step S32 based on a judgment to be a suspicious person in the surveillance target area.

If it is a person or vehicle driver that possesses the authentication card 21 in the above-described step S23 or when the shot person' s face image matches any of the previously registered employees' face images registered in advance in the above-described step S24, the suspicious person/suspicious vehicle driver determination function unit 112 determines in step S25 whether more detailed access permission information has been set for the back facility. That is, it has been determined here, through the determination processing in the above-described step S21 to step S24, that the person present in the back facility such as a truck yard is not a suspicious person, suspicious vehicle driver, or suspicious vehicle. But, it is sometimes wished not to allow admission to a specific department of the back facility or at certain times for administrative reasons even when the person is not a suspicious person. For example, access concerned persons are determined depending on, as content factors, the intended use and work type of each workplace, the office room, or each room and/or the degree of information so as to allow only permitted concerned persons' access. On the other hand, concerned persons' access is allowed at only certain times in accordance with an operation schedule including predetermined days of the week and hours as time factors.

If more detailed access permission information has been set in the above-described step S25, the suspicious person/suspicious vehicle driver determination function unit 112 determines in step S26 whether the person is a corresponding person who can gain access to a specific place of the back facility or at a specific time or the like thereto.

If the person is a corresponding person who can gain access to a specific department of the back facility or at a specific time or the like thereto or if access permission information has not been set in the above-described step S25, the suspicious person/suspicious vehicle driver determination function unit 112 determines in step S27 that the person is not a suspicious person but a permitted person. Next, the control unit 110 terminates the present monitoring control in step S28 to end the present flow.

On the other hand, if the person is not a corresponding person who can gain access to a specific place of the back facility or at a specific time or the like thereto in the above-described step S26, the suspicious person/suspicious vehicle driver determination function unit 112 determines in step S29 that the person is not a suspicious person but is also not a permitted person.

Next, the control unit 110 issues to the non-permitted person a message such as "Take procedures for access" or "Check the schedule" by, for example, voice or a display using a display panel in step S30.

The control unit 110 determines in step S31 whether the above-described non-permitted person has taken an action (including an action to avoid accessing etc.) in response to the message. If the above-described non-permitted person has taken an action in response to the message, the processing proceeds to step S28 to perform a monitoring termination. If the above-described non-permitted person has not taken an action in response to the message, the processing proceeds to step S32.

The processing also shifts to step S32 when a confirmation by face authentication could also not be made in the above-described step S24. It is when a confirmation of the authentication card 21 by the RFID reader 20 could not be made (step S23: No) and a confirmation by face authentication could also not be made (step S24: No) despite a person, vehicle driver, or vehicle being in the back facility such as a truck yard that the processing proceeds by way of the above-described step S24. It is when the person is not a suspicious person but a non-permitted person and a person who did not follow the instruction by the present digital loss/accident defense system and is therefore treated like a suspicious person that the processing proceeds by way of the above-described step S29 to step S31.

The suspicious person/suspicious vehicle driver determination function unit 112 determines the person to be a suspicious person in step S32 to proceed to step S33 (Fig. 6) .

In the case of a determination to be a suspicious person in the above-described step S32, in step S33, the control unit 110 acquires positional information of an employee who approached the suspicious person from the position determination unit 113.

In step S34, the control unit 110 determines the position of a mobile terminal device 30 closest to the suspicious person based on the acquired positional information.

In step S35, the identified person tracking unit 115 of the control unit 110 tracks movement of the suspicious person.

In step S36, the transmission control unit 116 of the control unit 110 transmits information regarding the suspicious person preferentially to an employee closest to the position of the suspicious person. For example, the transmission control unit 116 transmits a sound/a moving image/positional information of the suspicious person (information of a back facility layout having marking thereon) by e-mail.

In this case, if the suspicious person distances himself/herself from the position of the closest mobile terminal device 30 by a predetermined distance, the information regarding the suspicious person may be transmitted to another mobile terminal device 30.

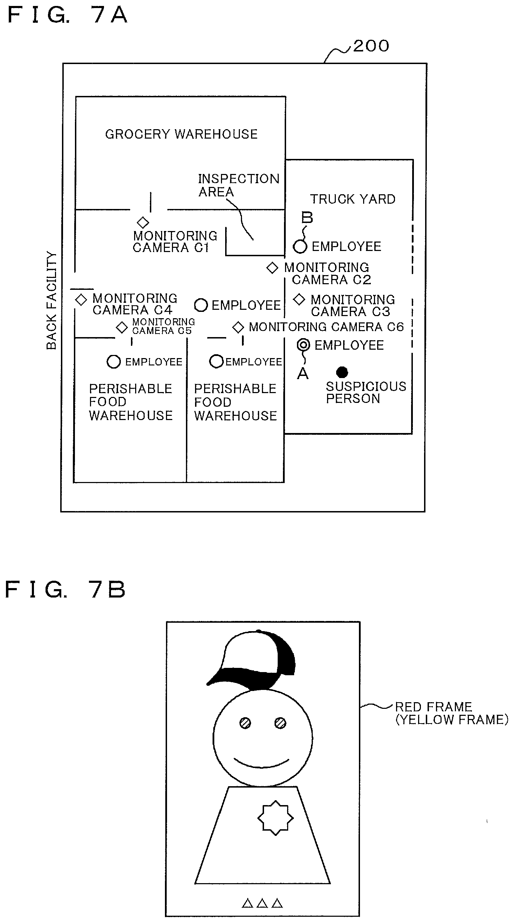

Fig. 7 is a view of information on a suspicious person and a back facility layout 200 (surveillance target area) to be transmitted to an employee present at the closest position. As shown in Fig. 7, there is information for which the suspicious person "● (filled circle)," the employee A "⊚ (double circle)" present at a position closest to the suspicious person, and other employees B "○ (open circle)" including the second-closest employee are plotted to overlap on the back facility layout 200 (surveillance target area). In this case, a person showing habitual suspicious behavior and a suspicious person may be shown in different colors by, for example, a red "● mark" and a yarrow "● mark, " respectively, and doing this allows simply judging whether being a person showing habitual suspicious behavior or a mere suspicious person. Also, a sound and/or moving image regarding the suspicious person may be transmitted. Transmitting a sound and/or moving image together with an image allows knowing information that cannot be represented by only the image, enabling the employee to take more appropriate actions. In addition, the sound function may be in a mode of allowing selecting whether to release the sound depending on the situation.

Also, to the employee A "⊚ (double circle) " present at the closest positon, more detailed information may be transmitted in order to monitor the suspicious person "● (filled circle)." Examples of the more detailed information include detailed information on the back facility layout 200 such as the floor-number name, back facility name, and corner name, information excerpts from histories of the suspicious person, and guidelines for action to be taken by the employee. Also, as more detailed information, as shown in Fig. 7B, there can be information showing the suspicious person with his/her "face" enlarged and detailed information "ΔΔΔ" on the suspicious person. In this case as well, a frame around the face of the person showing habitual suspicious behavior and a frame around a mere suspicious person may be shown in different colors of, for example, red and yellow, respectively. Transmitting the above-described detailed information has an effect of further promoting prevention of omission of monitoring and erroneous identification.

Returning to the flow in Fig. 6, in step S37, the transmission control unit 116 determines if there is no answer-back signal (acknowledgement: ACK) even after an elapse of a predetermined time (for example, five seconds) from transmitting the information regarding the suspicious person to a mobile terminal device 30 of an employee present at the closest position or if an answer-back of response-inability (negative-acknowledgement: NCK) has been returned from the mobile terminal device 30.

If there is no acknowledgement ACK even after an elapse of a predetermined time (for example, five seconds) from the mobile terminal device 30 or if a negative-acknowledgement NCK is returned from the mobile terminal device 30, the transmission control unit 116 determines the position of a mobile terminal device 30 the second closest to the suspicious person the collation result with whom is a match, and transmits the information regarding the suspicious person to said mobile terminal device 30 in step S38.

The answer-back to be executed by the above-described employee is, specifically, if having received the information regarding the suspicious person transmitted from the monitoring device 100, performing an operation of touching (or depressing) a predetermined button (for example, an "ANSWER-BACK" button) of the mobile terminal device 30 (smartphone 30a, tablet 30b, or notebook PC 30c) in a preset time (for example, five seconds). In response to this operation, the mobile terminal device 30 returns an answer-back (answer-back signal) to the monitoring device 100, judging that the information on the suspicious person has been received and said employee has performed a checking operation.

As above, if there is no acknowledgement ACK even after an elapse of a predetermined time (for example, five seconds) from the mobile terminal device 30 or if an answer-back of response-inability of a negative-acknowledgement NCK has been returned from said mobile terminal device 30, the transmission control unit 116 chooses a second employee concerned person to perform a re-transmission to him/her. The second employee concerned person is (1) a concerned person such as an employee who is the second closest to the suspicious person, (2) a security guard, a store manager, an assistant store manager, (3) the headquarters/head office affiliates, or the like.

In step S39, the transmission control unit 116 transmits the information regarding the suspicious person to the mobile terminal device 30 of the headquarters/head office or security company.

In step S40, the control unit 110 determines whether the person identified as a suspicious vehicle driver is trying to drive out of the surveillance area.

If the person identified as a suspicious vehicle driver is trying to drive out of the surveillance area, the control unit 110 activates the vehicle stopper device 50 in step S41 and hinders the suspicious vehicle's driving away therefrom to end the present flow. If the suspicious vehicle driver is not trying to drive out of the surveillance area, the control unit 110 directly ends the present flow.

### [Monitoring control of mobile terminal device 30]

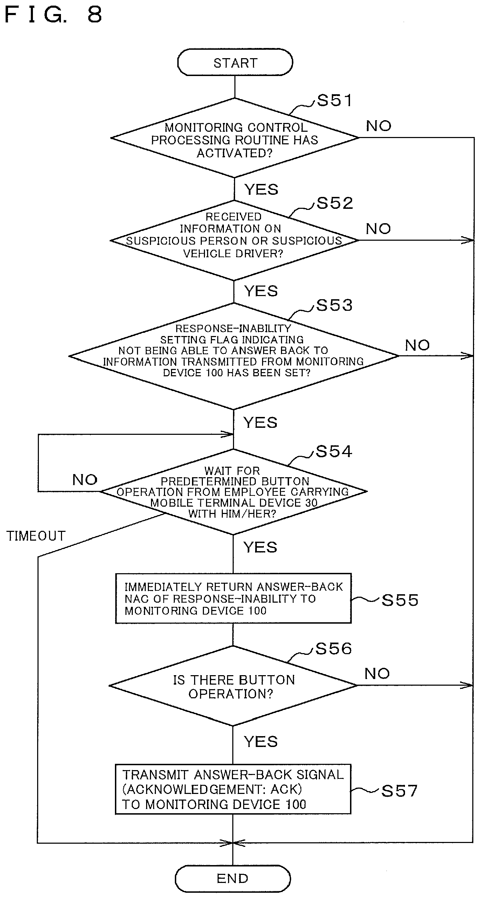

Fig. 8 is a flowchart showing a monitoring control processing of the mobile terminal device 30 of the digital loss/accident defense system. The present flow is executed by the control unit (not shown) of the mobile terminal device 30.

First, the control unit of the mobile terminal device 30 determines in step S51 whether the present monitoring control processing routine has activated, and directly ends the present flow if the present monitoring control processing routine has not activated.

If the present monitoring control processing routine has activated, the control unit of the mobile terminal device 30 determines in step S52 whether it has received information on a suspicious person transmitted from the monitoring device 100.

If having not received the information on a suspicious person described above, the control unit of the mobile terminal device 30 directly ends the present flow.

If the information on a suspicious person described above has been received, the response-inability setting unit of the mobile terminal device 30 determines in step S53 whether a response-inability setting flag indicating not being able to answer back to information transmitted from the monitoring device 100 has been set. In addition, the setting of the response-inability setting flag may be, for example, completed by activating the present monitoring control processing routine and holding down a predetermined button and cancelled by again holding down the predetermined button after the completion of setting.

If the response-inability setting flag has been set, the response-inability setting unit of the mobile terminal device 30 immediately returns an answer-back NAC of response-inability to the monitoring device 100 in step S54 to end the present flow.

If the response-inability setting flag has not been set, the control unit of the mobile terminal device 30 waits for a predetermined button (for example, a "ANSWER-BACK" button) operation from an employee carrying this mobile terminal device 30 with him/her in step S55.

If there is a button operation described above, the control unit of the mobile terminal device 30 transmits an answer-back signal (acknowledgement: ACK) to the monitoring device 100 in step S56 to end the present flow. In addition, if there is no button operation even after an elapse of a predetermined time, the control unit of the mobile terminal device 30 performs a timeout in step S57 to end the present flow.

### [Application example 1]

Description will now be given, in the case of a back facility of a commercial facility, of a back facility configuration of the digital loss/accident defense system 1000.

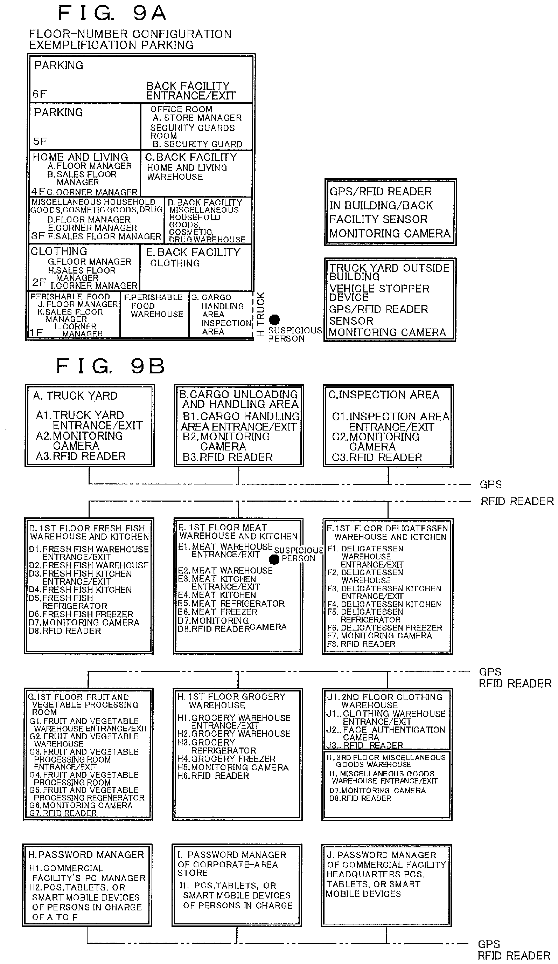

Fig. 9A and Fig. 9B are views showing an example of a back facility layout of the digital loss/accident defense system.

In the digital loss/accident defense system 1000, the monitoring device 100 stores back facility layout positional information, positional information of the RFID readers 20 on the back facility layout 200, and employees' positional information acquired by the RFID readers 20.

In the back facility, the monitoring cameras 11 and the RFID readers 20 are respectively installed. If GPS radio waves are unstable and the radio waves do not reach, positional information can be acquired by the RFID reader 20.

The monitoring device 100, if having recognized a suspicious person by the monitoring camera 11, displays on a back facility layout of the display unit 140 where the suspicious person is present in terms of floor number, entrance, back facility name, and corner (refer to Fig. 7) name.

The monitoring device 100 recognizes positional information by the monitoring camera 11 on a suspicious person who has come to the store. The monitoring device 100 then recognizes positional information of back facility administrators, security guards, and a store administrator by a GPS function or the RFID readers 20. The monitoring device 100 then determines which employee is close to the suspicious person, and transmits information (such as positional information, a shot image, and a face image) on the suspicious person together with an e-mail message, a moving image, and a back facility layout in real time to an employee present at a position closest to the suspicious person. The employee present at a position close to the suspicious person can respond quickly thereto to appropriately respond thereto beforehand and can thus prevent an act of theft and the like.

The monitoring device 100 may transmit information (such as positional information, a shot image, and a face image) on the suspicious person together with an e-mail message, a moving image, and a back facility layout in real time to an employee present at a position closest to the suspicious person, followed by transmitting simple information to entrances/exits nearby, back facility corners, and the identical floor number or the security guards and store administrator, as needed, besides said employee.

Conversely, the monitoring device 100 may transmit more detailed information to the closest employee described above. Examples of the more detailed information that can be mentioned include information for which positional information of the intruder and employee is displayed to overlap a floor-number name, back facility name, and corner name layout drawing, and information showing the intruder with his/her "face" enlarged. This has an effect of preventing omission of monitoring and erroneous identification.

In a building where GPS radio waves can be received, employees' positional information is acquired using a GPS function. In a building, back facility, and the like where GPS radio waves cannot be received, employees' positional information is acquired by the RFID readers 20.

The monitoring cameras 11 are preferably installed in a plurality of numbers where not in direct sight of employees, aisles, etc.

The monitoring device 100 has stored in advance positional information by the monitoring cameras 11, a corresponding floor number, back facility, floor, entrance/exit, and recognized person(s) to be searched, and a range in which the monitoring cameras 11 can authenticate intruders. For example, the monitoring device 100 stores a floor-number name, a back facility name, a corner name, and a back facility layout. An employee can respond quickly to the place of a corresponding suspicious person.

For example, in Fig. 9A, when a person approaches the cargo handling area/inspection area the entrance/exit of which faces a truck yard, an employee who possesses the authentication card 21 to be authenticated by the RFID reader 20 can gain access thereto because it is a permitted area for him/her.

The monitoring device 100 identifies a person other than the person described above as a suspicious person, and transmits layout information on which the position of the suspicious person is presented to the mobile terminal device 30 (smartphone 30a, tablet 30b, or notebook PC 30c) of an employee closest to the suspicious person. The employee to which the information was transmitted can respond quickly to the scene of the back facility and prevent theft and the like in advance.

If the suspicious person has left the back facility, the monitoring device 100 likewise transmits information indicating that he/she has left to an employee(s) concerned.

Also, the monitoring device 100 activates the vehicle stopper device 50 if the person identified as a suspicious vehicle driver is trying to drive out of the surveillance area. This hinders the suspicious vehicle's driving away therefrom to prevent theft by the vehicle.

Likewise, in Fig. 9B, when a person approaches the fresh fish warehouse entrance/exit on the first floor to the miscellaneous goods warehouse entrance/exit on the third floor, an employee who possesses the authentication card 21 to be authenticated by the RFID reader 20 can gain access thereto to work. In the case of a person who does not possess the authentication card 21, he/she is identified as a suspicious person, and the monitoring device 100 transmits layout information on which the position of the suspicious person is presented in real time to the mobile terminal device 30 (smartphone 30a, tablet 30b, or notebook PC 30c) of an employee closest to the suspicious person.

The back facility such as the office room or money accounting office room can likewise be monitored against suspicious persons.

Also, as for factory laboratories, offices, and the like other than commercial facilities, when a person approaches an entrance/exit outside its building or on the periphery thereof, an employee who possesses the authentication card 21 to be authenticated by the RFID reader 20 can gain access thereto because it is a permitted area for him/her. In terms of a person who has not obtained permission, layout information on which his/her position is transmitted in real time. In this case, an alarm may be sent or a door may be locked not to allow access . In addition, locking and unlocking is managed by a security guard, an employee, or a PC password holder at a security guards room.

Hereinafter, a specific function of the digital loss/accident defense system shown in Fig. 9A will be described.

A person who arrived in a vehicle at a back area tries to make delivery by entering a cargo handling area/inspection area or the like.

If the person is a suspicious person who does not possesses the authentication card 21 or whose face image has not been registered, the monitoring device 100 transmits information (including a moving image) regarding the suspicious person and back facility layout information on which the floor number, the cargo handling area, the warehouse name, the room name, and the suspicious person are presented in real time to a security guards room PC, a tablet, and the mobile terminal device 30 (smartphone 30a, tablet 30b, or notebook PC 30c) of an employee(s) concerned.

On the other hand, if the person is a person concerned permitted access to rooms and warehouses of the back facility and possesses the authentication card 21 or is an employee (for example, a store manager, an assistant store manager, a floor manager, a perishable food manager, a clothing manager, a miscellaneous household goods manager, a home and living manager, a security guard, a person in charge of each section, an office room person in charge, a person in charge of money accounting, or a person in charge of inspections) having already been registered for face authentication by the monitoring camera 11, he/she can gain access. In this case, it is preferable to allow access in a divided manner by access permission by operations. It is preferable to limit a section or rooms to which access is allowed only for a persons who have job responsibility in or in charge of the section, or to limit a section to which permission to access has been obtained in the case of a delivery by an outsider.

When a person who has not obtained permission tries to gain access, the monitoring device 100 determines that the person is a suspicious person and performs transmission to an employee (s) concerned as described above. It is also possible, when the suspicious person tries to access each room or each warehouse, to lock the door of an entrance/exit so as not to allow the access.

When an operator who came for a delivery tries to access a warehouse other than a warehouse(s) to which permission has been obtained, the monitoring device 100, if the operator does not possess the authentication card 21 to be authenticated by the RFID reader 20 or face authentication by the monitoring camera 11 cannot be performed, transmits information regarding the suspicious person in real time to the mobile terminal device of a security guard or employee concerned present in the inspection area. In this case, the monitoring device 100 makes an alarm system provided at an outdoor entrance/exit sound. Also, the monitoring device 100 activates the vehicle stopper device 50 so as not to allow the suspicious person's vehicle to drive out of the back facility.

In the present embodiment, a transmission level of information regarding a suspicious person may be preset. For example, whether to perform transmission to a person in charge of management or responsible person of area headquarters or a head office can be set.

As above, the digital loss/accident defense system, if a suspicious person is found by the RFID reader 20 or the monitoring camera 11 installed in a back facility, by an e-mail message including a moving image, presents information regarding the suspicious person on a back facility layout, and transmits the same first to an employee close to the suspicious person and then to respective responsible persons.

If the employee (responsible person) close to the suspicious person does not receive an action of checking the e-mail message for some reason for a predetermined time (for a few seconds) or an answer-back that no return will be sent is received, an e-mail message is transmitted to a responsible person the second closest to the suspicious person. In this case, transmitting the e-mail message also to a person in charge of security and/or the store manager allows the person in charge of security and/or store manager having received the e-mail message to make instructions and respond to respective persons in charge by a more professional/superior judgement. In addition, the digital loss/accident defense system has stored in advance the position of the store manager, the assistant store manager, persons in charge of security, back facility responsible persons, and corner managers by a GPS or the RFID readers 20.

### [Application example 2]

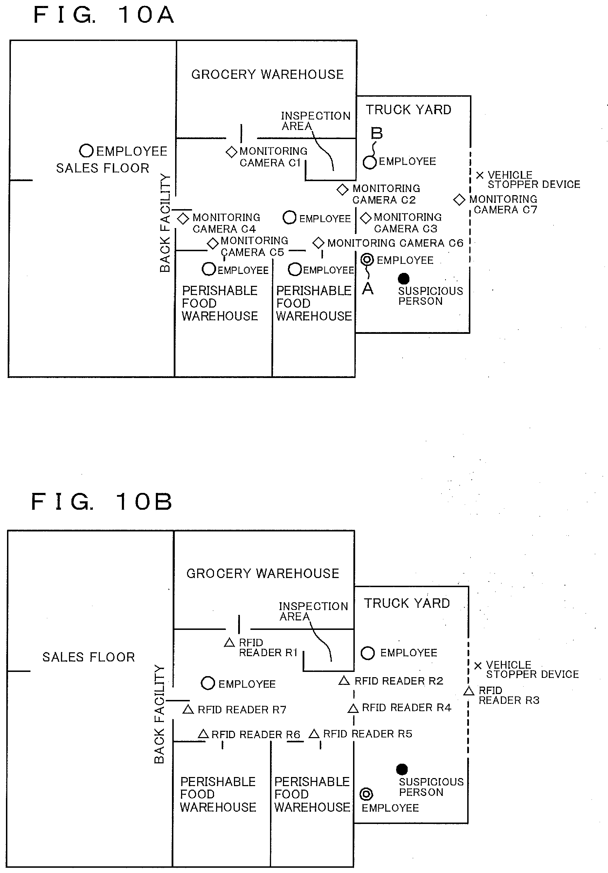

Fig. 10 includes views showing an example of a back facility layout of the digital loss/accident defense system. Fig. 10A is a first-floor back facility planar layout by a GPS and an arrangement plan of monitoring cameras 11, and Fig. 10B is a first-floor back facility planar layout by "Δ marks" of RFID readers and an arrangement plan of monitoring cameras. In addition, other respective floors also have almost the same back facility layout.

As shown in Fig. 10A, it is assumed that a suspicious person "● (filled circle) " has parked his/her vehicle in a truck yard of a back facility and disguised himself/herself as a client concerned person while blending into the back facility. The entrances/exits of a warehouse, cargo handling area, inspection area, and refrigerator/freezer of the back facility are installed with the monitoring cameras 11, and it is determined whether a face image of a person shot by the monitoring camera 11 matches any of the face images of employees such as store concerned persons, registered persons with RFID authentication cards, and employee concerned persons, and the person is determined to be a suspicious person if the face image does not match any thereof. Then, information (refer to Fig. 7A) on the suspicious person is transmitted to the mobile terminal device 30 (smartphone 30a, tablet 30b, or notebook PC 30c) an employee "⊚ (double circle)" closest to the suspicious person carries with him/her.

Here, the information on the suspicious person has been overlapped on the back facility layout 200. If the suspicious person is a person showing habitual suspicious behavior, the person is shown by a red "● mark." An employee "⊚ (double circle) " closest to the suspicious person can shift to a monitoring action from the very first when he/she came to the store, which is the most important, to restrain the suspicious person "● (filled circle)" from an initial motion, thereby preventing an act of theft and the like. Moreover, transmitting to the other employees concerned "○ (open circle) " an e-mail message, a moving image, and information regarding the suspicious person presenting a back facility layout by e-mail allows more effectively preventing an act of theft.

Doing this allows track monitoring even in a case that the suspicious person "● (filled circle)" takes action such as moving around the back facility using a cart or a case that there is a plurality of suspicious persons "● (filled circle)," thereby more effectively dealing with the case for preventing an act of theft.

As shown in Fig. 10B, in a truck yard of a back facility, the RFID readers 20 are installed, and if a person is authenticated to be a suspicious person who does not possess the authentication card 21 to be authenticated by the RFID reader 20, when the person accesses the truck yard, the inspection area, the cargo handling area, and/or the warehouse on each floor, the corresponding location name is presented on a back facility layout and transmitted together with positional information of the suspicious person to an employee "⊚ (double circle)" closest to the suspicious person.

As above, when a person who does not possess the authentication card 21 to be authenticated by the RFID reader 20 accesses a back facility including a truck yard, information regarding the suspicious person is presented on a back facility layout and this is transmitted to a smart mobile device of an employee present closest to the suspicious person. The employee can quickly respond to the location of the suspicious person and prevent theft and other cases in advance. On the back facility layout, the floor number, the section and warehouse name, the cargo handling area, the truck yard, the refrigerator/freezer name, the inspection area, etc., are presented, which allows an employee concerned to immediately respond to the scene quickly to be on guard.

The person showing habitual suspicious behavior is a person who has committed theft or an act akin thereto and thus recorded, and the suspicious person is a person who has accessed a no-entry back facility such as the inspection area, cargo handling area, warehouses, and/or refrigerator/freezer of a back facility without permission. When any of these enters the back facility, the person is regarded as a suspicious person and information regarding the suspicious person is transmitted to a smart mobile device of an employee present closest to the suspicious person. Further, the transmission may be performed to a PC at a security guards room or a smart mobile device of a responsible employee concerned. This allows preventing theft, tampering, and leakage of corporate information in real time.

Further, even when a person showing habitual suspicious behavior or a suspicious person tries to access each room, the door may be prevented from opening not to allow his/her access. Accordingly, even when a person tries to gain access by threatening an employee, the person cannot gain access because of a collation result if he/she is not a previously registered concerned employee.

The present digital loss/accident defense system allows determining access concerned persons for rooms depending on the intended use and work type of each workplace, the office room, or each room and/or the degree of information. Even among those who possess the authentication cards 21, only a permitted concerned person's access is allowed. When non-permitted, another concerned person or an outsider tries to gain access, information is transmitted to an employee present closest to him/her as treatment as a quasi-suspicious person. This allows an employee concerned or security guard to quickly respond thereto.

Also, according to the present digital loss/accident defense system, even when a non-permitted suspicious person enters each workplace, the office room, each warehouse, the refrigerator/freezer, or the like without permission, the monitoring camera 11 installed in each room or each warehouse activates in an interlocked manner so as to transmit back facility layout information on which the floor number and each room name or each warehouse name are presented in real time to the mobile device of an employee concerned present closest to him/her. This allows preventing theft, tampering, and leakage of corporate information from occurring.

Also, to each factory, each warehouse, each workplace, and each room in a building facility, predetermined personnel are permitted to gain access in accordance with an operation schedule including days of the week and working hours to perform operations. According to the present digital loss/accident defense system, if a person tries to gain access without permission outside of the operation schedule, this is detected by the RFID reader 20 and the monitoring camera 11, and if the accessor has obtained permission for his/her unscheduled access is determined, and a person who has not obtained permission is regarded as a suspicious person and transmitted together with the suspicious person's image (including a moving image), a corresponding room name, floor number, workplace, factory name, and/or the like in real time to the mobile terminal device 30 (smartphone 30a, tablet 30b, or notebook PC 30c) of a concerned person or security guard present closest to him/her. This allows an employee concerned to quickly respond to the scene and report to a jurisdictional police station. But, when access is necessary because of urgency, the access may be exceptionally allowed by an administrator, a security guard, or the like contacting the concerned and canceling the present monitoring control.

Also, the transmission can also be performed in a distinguishable manner between a suspicious person being a person who has not been registered for face authentication by the monitoring camera 11 or a person who does not possess the authentication card 21 to be authenticated by the RFID reader 20 and a person showing habitual suspicious behavior. For example, a suspicious person is displayed in a yellow frame, and a person showing habitual suspicious behavior is displayed in a red frame.

In addition, commercial facilities, factories, laboratories, head offices, etc., that are large scale include large scale facilities on the order of 50 m × 200 m per floor and on the order of 30,000 to 300,000 m² with three to four floors, and to any of these, the present system can respond. Also, the present system can respond to small convenience stores and malls, respective terminals, complex building hospitals, hotels, cultural facilities, skyscrapers, etc., as well.

As described above in detail, according to the present embodiment, the digital loss/accident defense system 1000 comprises the mobile terminal devices 30 that a plurality of employees respectively carry with them throughout a surveillance target area such as a back facility, the position determination unit 113 that acquires positional information of the plurality of mobile terminal devices 30 in the surveillance target area, the face authentication function unit 111 that collates a face image of a person shot by the monitoring camera 11 with a face image of a suspicious person accumulated in the face information DB 160, and the control unit 110 that, if a result of collation by the face authentication function unit 111 is a match (a non-match with an authenticated person's face image, or a match with a suspicious person's face image), determines the position of a mobile terminal device 30 closest to the suspicious person, based on the positional information acquired from the position determination unit 113, and transmits information regarding the suspicious person to the mobile terminal device 30.

According to this configuration, an act of theft and the like can be prevented in advance by monitoring behavior of a suspicious person in real time in a surveillance target area such as a back facility.

Also, in the present embodiment, the mobile terminal device 30 includes the response-inability setting unit that presets not being able to answer back to information transmitted from the control unit 110, and when the response-inability setting unit has set being in response-inability, returns an answer-back of said response-inability if transmission of information is received from the monitoring device 100. Accordingly, the monitoring device 100 can transmit the above-described information to a second-closest employee or person in charge without waiting for an answer-back from the mobile terminal device 30 for a predetermined time (for example, five seconds). Theft is a split-second act, so the effect of being able to be supported by the second-closest employee or person in charge without waiting for a predetermined time (for example, five seconds) is great. That is, the digital loss/accident defense system 1000 can respond to a time-sensitive situation through collaboration of the monitoring device 100 and the mobile terminal device 30.

In actual operation, employees may go to a warehouse or go to the bathroom, and thus do not always stay in fixed positions. For this reason, in the conventional system, reporting to an employee to whom a report is to be made has not been feasible in some cases. In the present embodiment, because the mobile terminal devices 30 can perform a setting for making the same report-off (meaning that the employee is in response-inability for being in the bathroom or the like), there is no load on the side of the monitoring device 100.

Also, in the present embodiment, because it is determined if a person authenticated in a surveillance target area such as a back facility is gaining access to a specific place in the surveillance target area or at a previously specified time, access of a person who is not a suspicious person in the surveillance target area but is a person without permission to access a specific place or at a previously specified time can be monitored, so the security level in preventing an act of theft, tampering, leaking information, or the like can be increased.

Also, in the present embodiment, comprising the vehicle stopper device 50 that restricts a vehicle's movement and activating the vehicle stopper device 50 if a suspicious vehicle driver tries to drive out of a back facility allows hindering the suspicious vehicle that is trying to flee from a surveillance target area such as a back facility, so an act of theft and the like can be more strongly prevented.

The above description is an exemplification of preferred embodiments of the present invention, and the scope of the present invention is not limited thereto. For example, in the present embodiment, a description has been given of the case of using the telephone line as a public line, but the present invention is not limited to this case, and for example, a radio communication line, the Internet, or a LAN may be used as a public line. Moreover, the communication terminal may be used according to the type of the public line, such as a transceiver used as a communication terminal when the public line is radio communication, and a personal computer or a palmtop computer used as a communication terminal when the public line is the Internet or a LAN. Thus constructing a digital loss/accident defense system using an existing public line allows expanding the usage form of a digital loss/accident defense system and allows suppressing the construction costs of a digital loss/accident defense system.

Moreover, the title of a digital loss/accident defense system and method has been used in the present embodiment, but this is for convenience of description, and the title may be digital smart security, a crime-prevention system, a security method, or the like.

Further, detection of an abnormal situation covers all of publicly-known matters. Examples of the abnormal situation are intrusion or approach of a suspicious person(s). Also, the report may be any, without being limited to an e-mail message.

Also, a digital loss/accident defense system and method of the present invention can also be realized by a program to operate a computer as the present digital loss/accident defense system or method. This program may be stored in a storage medium that can be read by a computer.

This storage medium recorded with the program may be a ROM itself of the present digital loss/accident defense system, or may be a storage medium such as a CD-ROM that can be read, when a program reading device such as a CD-ROM drive is provided as an external storage device, by inserting therein the storage medium.

Moreover, the above-described storage medium may be a magnetic tape, a cassette tape, a flexible disk, a hard disk, an MO/MD/DVD or the like, or a semiconductor memory.

### [Industrial Applicability]

The digital loss/accident defense system, method, and program according to the present invention provide real-time responses in corporate and commercial facilities, offices, and the like to prevent loss of property and life and economic loss, whereby providing great utilization effects.

### [Reference Signs List]

11 Monitoring camera
20 RFID reader
21 Authentication card
30 Mobile terminal device
40 GPS
50 Vehicle stopper device
100 Monitoring device
110 Control unit (control means)
111 Face authentication function unit (face authentication collating means)
112 Suspicious person/suspicious vehicle driver determination function unit
113 Position determination unit (positional information acquiring means)
114 Layout information storage unit
115 Identified person tracking unit
116 Transmission control unit
120 Input unit
130 Storage unit
140 Display unit
150 Output unit
160 Face information database (DB) (face image storing means)
170 Image processing unit
180 Interface (I/F) unit
190 Communication unit
200 Back facility layout (surveillance target area)
1000 Digital loss/accident defense system

## Claims

1. A digital loss/accident defense system (1000) for preventing an act by a suspicious person by monitoring a video shot by a monitoring camera (11) installed so as to cover a surveillance target area (200) being a staff-only area where unauthorized entry is prohibited, comprising:
a monitoring device (100) including:
positional information acquiring means (113) for acquiring positional information of mobile terminal devices (30) being carried by a plurality of employees respectively throughout the surveillance target area (200);
face image storing means (160) for accumulating a face image of an authenticated person;
face authentication collating means (111) for collating a face image of a person shot by the monitoring camera (11) with the face image accumulated in the face image storing means (160); and
control means (110) for, if a result of collation by the face authentication collating means (111) is a non-match with an authenticated person's face image, determining him/her as a suspicious person, determining a position of the mobile terminal device closest to the suspicious person based on the positional information acquired from the positional information acquiring means (113), and transmitting information regarding the suspicious person to said mobile terminal device (30); and
said mobile terminal device (30) including a response-inability setting unit that presets not being able to answer back to information transmitted from said monitoring device (100) and returning, when response-inability has been set by said response-inability setting unit, an answer-back of said response-inability if transmission of information is received from said monitoring device (100),
wherein
the control means (110) is **characterized by**, if an answer-back of response-inability is returned from the mobile terminal device (30), determining a position of the mobile terminal device (30) the second closest to the suspicious person, and transmitting the information regarding the suspicious person to said second closest mobile terminal device (30), and
the information regarding the suspicious person includes information of a position of the suspicious person and a position of the mobile terminal device (30) to which the information has been transmitted overlapped on the surveillance target area.

2. The digital loss/accident defense system (1000) according to claim 1, wherein the face image storing means (160) further accumulates a face image of a suspicious person, and
if a result of collation by the face authentication collating means (111) is a match with a suspicious person's face image, the control means (110) transmits information regarding the suspicious person to the mobile terminal device closest to the suspicious person.

3. The digital loss/accident defense system (1000) according to claim 1, comprising an RFID reader installed in the surveillance target area and an authentication card to be authenticated by the RFID reader, wherein
if authentication of the authentication card possessed by a person in the surveillance target area by the RFID reader is not established, the control means (110) determines him/her as a suspicious person, and transmits information regarding the suspicious person to the mobile terminal device closest to the suspicious person.

4. The digital loss/accident defense system (1000) according to any one of claims 1 to 3, wherein the control means (110) determines if a person authenticated in the surveillance target area is gaining access to a specific place in the surveillance target area or at a previously specified time, and
if the authenticated person is not permitted access to the specific place or at the specified time, determines the person as a suspicious person.

5. The digital loss/accident defense system (1000) according to any one of claims 1 to 3, comprising a vehicle stopper device that restricts a vehicle's movement, wherein
the control means (110) activates the vehicle stopper device if a vehicle driven by the suspicious person tries to drive out of the surveillance target area.

6. The digital loss/accident defense system (1000) according to any one of claims 1 to 4, wherein if a predetermined time has elapsed after transmitting the information regarding the suspicious person to the mobile terminal device, the control means (110) determines a position of the mobile terminal device the second closest to the suspicious person, and transmits the information regarding the suspicious person to said mobile terminal device.

7. A digital loss/accident defense method for preventing an act by a suspicious person by monitoring a video shot by a monitoring camera (11) installed so as to cover a surveillance target area being a staff-only area where unauthorized entry is prohibited, comprising:
a monitoring device (100) performing:
a positional information acquiring step of acquiring positional information of mobile terminal devices being carried by a plurality of employees respectively throughout the surveillance target area;
a face image storing step of accumulating a face image of an authenticated person;
a face authentication collating step of collating a face image of a person shot by the monitoring camera (11) with the face image accumulated in the face image storing step; and
a control step of, if a result of collation by the face authentication collating step is a non-match with an authenticated person's face image, determining him/her as a suspicious person, determining a position of the mobile terminal device closest to the suspicious person based on the positional information acquired from the positional information acquiring means (113), and transmitting information regarding the suspicious person to said mobile terminal device; and said mobile terminal device performing:
a response-inability setting step of presetting not being able to answer back to information transmitted from said monitoring device (100); and
an answering back of response-inability step of returning, when response-inability has been set by said response-inability setting step, an answer-back of said response-inability if transmission of information is received from said monitoring device (100),
wherein
the control step is **characterized by**, if an answer-back of response-inability is returned from the mobile terminal device, determining a position of the mobile terminal device the second closest to the suspicious person, and transmitting the information regarding the suspicious person to said second closest mobile terminal device, and
the information regarding the suspicious person includes information of a position of the suspicious person and a position of the mobile terminal device to which the information has been transmitted overlapped on the surveillance target area.

8. A program for causing a computer to function as
a digital loss/accident defense system (1000) for preventing an act by a suspicious person by monitoring a video shot by a monitoring camera (11) installed so as to cover a surveillance target area being a staff-only area where unauthorized entry is prohibited, the system (1000) comprising:
a monitoring device (100) including:
positional information acquiring means (113) for acquiring positional information of mobile terminal devices a plurality of employees respectively carry with them throughout the surveillance target area,
face image storing means (160) for accumulating a face image of an authenticated person,
face authentication collating means (111) for collating a face image of a person shot by the monitoring camera (11) with the face image accumulated in the face image storing means (160), and
control means (110) for, if a result of collation by the face authentication collating means (111) is a non-match with an authenticated person's face image, determining him/her as a suspicious person, determining a position of the mobile terminal device closest to the suspicious person based on the positional information acquired from the positional information acquiring means (113), and transmitting information regarding the suspicious person to said mobile terminal device; and
said mobile terminal device including a response-inability setting unit that presets not being able to answer back to information transmitted from said monitoring device (100) and returning, when response-inability has been set by said response-inability setting unit, an answer-back of said response-inability if transmission of information is received from said monitoring device (100), wherein
the control means (110) is **characterized by**, if an answer-back of response-inability is returned from the mobile terminal device, determining a position of the mobile terminal device the second closest to the suspicious person, and transmitting the information regarding the suspicious person to said second closest mobile terminal device, and
the information regarding the suspicious person includes information of a position of the suspicious person and a position of the mobile terminal device to which the information has been transmitted overlapped on the surveillance target area.

## Patentansprüche

1. Digitales Sicherheitssystem zum Schutz vor Verlust/Unfall (1000) zum Verhindern einer Tat durch eine verdächtige Person durch Überwachen eines Videos, das von einer Überwachungskamera (11) aufgenommen wird, die so installiert ist, dass sie einen Observations-Zielbereich (200) abdeckt, der ein dem Personal vorbehaltener Bereich ist, wo ein unberechtigter Zugang verboten ist, umfassend:
eine Überwachungsvorrichtung (100), umfassend:
Positionsinformations-Erlangungsmittel (113) zum Erlangen von Positionsinformationen von mobilen Endgeräten (30), die von mehreren Angestellten jeweils durch den Observations-Zielbereich (200) mit sich geführt werden;
Gesichtsbild-Speichermittel (160) zum Zusammenstellen eines Gesichtsbilds einer authentifizierten Person;
Gesichtsauthentifizierungs-Vergleichsmittel (111) zum Vergleichen eines Gesichtsbilds einer Person, das von der Überwachungskamera (11) aufgenommen wird, mit dem Gesichtsbild, das in dem Gesichtsbild-Speichermittel (160) zusammengestellt wird; und
Steuermittel (110) zum, wenn ein Vergleichsergebnis durch das Gesichtsauthentifizierungs-Vergleichsmittel (111) keine Übereinstimmung mit dem Gesichtsbild einer authentifizierten Person ist, Bestimmen derselben als eine verdächtige Person, Bestimmen einer Position des mobilen Endgeräts, das der verdächtigen Person am nächsten ist, auf der Grundlage der von dem Positionsinformations-Erlangungsmittel (113) erhaltenen Positionsinformationen und Senden von Informationen über die verdächtige Person an das mobile Endgerät (30); und
wobei das mobile Endgerät (30) eine Antwortunfähigkeits-Einstellungseinheit umfasst, welche vorab einstellt, nicht in der Lage zu sein, auf Informationen zu antworten, die von der Überwachungsvorrichtung (100) gesendet werden, und, wenn von der Antwortunfähigkeits-Einstellungseinheit die Antwortunfähigkeit eingestellt worden ist, eine Meldung der Antwortunfähigkeit zurücksendet, wenn die Sendung von Informationen von der Überwachungsvorrichtung (100) empfangen wird,
wobei
das Steuermittel (110) **dadurch gekennzeichnet ist, dass** es, wenn von dem mobilen Endgerät (30) eine Meldung einer Antwortunfähigkeit zurückgesendet wird, eine Position des mobilen Endgeräts (30) bestimmt, das der verdächtigen Person am zweitnächsten ist, und die Informationen über die verdächtige Person an das zweitnächste mobile Endgerät (30) sendet, und
die Informationen über die verdächtige Person Informationen über eine Position der verdächtigen Person und eine Position des mobilen Endgeräts (30) umfassen, an welches die Informationen gesendet worden sind, überlagert über den Observations-Zielbereich.

2. Digitales Sicherheitssystem zum Schutz vor Verlust/Unfall (1000) nach Anspruch 1, wobei das Gesichtsbild-Speichermittel (160) ferner ein Gesichtsbild einer verdächtigen Person zusammenstellt, und
wenn ein Vergleichsergebnis durch das Gesichtsauthentifizierungs-Vergleichsmittel (111) eine Übereinstimmung mit dem Gesichtsbild einer verdächtigen Person ist, das Steuermittel (110) Informationen über die verdächtige Person an das mobile Endgerät sendet, das der verdächtigen Person am nächsten ist.

3. Digitales Sicherheitssystem zum Schutz vor Verlust/Unfall (1000) nach Anspruch 1, umfassend eine RFID-Lesevorrichtung, die in dem Observations-Zielbereich installiert ist, und eine Authentifizierungskarte, die durch die RFID-Lesevorrichtung zu authentifizieren ist, wobei wenn eine Authentifizierung der Authentifizierungskarte, die sich im Besitz einer Person in dem Observations-Zielbereich befindet, nicht nachgewiesen ist, das Steuermittel (110) sie als eine verdächtige Person bestimmt und Informationen über die verdächtige Person an das mobile Endgerät sendet, das der verdächtigen Person am nächsten ist.

4. Digitales Sicherheitssystem zum Schutz vor Verlust/Unfall (1000) nach einem der Ansprüche 1 bis 3, wobei das Steuermittel (110) bestimmt, ob eine in dem Observations-Zielbereich authentifizierte Person Zugang zu einem speziellen Ort in dem Observations-Zielbereich oder zu einer vorab festgelegten Zeit erhält, und
wenn die authentifizierte Person keine Berechtigung zum Zugang zu dem speziellen Ort oder zu der festgelegten Zeit hat, die Person als eine verdächtige Person bestimmt.

5. Digitales Sicherheitssystem zum Schutz vor Verlust/Unfall (1000) nach einem der Ansprüche 1 bis 3, umfassend eine Fahrzeugstoppvorrichtung, welche die Bewegung eines Fahrzeugs begrenzt, wobei
das Steuermittel (110) die Fahrzeugstoppvorrichtung aktiviert, wenn ein von der verdächtigen Person gefahrenes Fahrzeug versucht, aus dem Observations-Zielbereich herauszufahren.

6. Digitales Sicherheitssystem zum Schutz vor Verlust/Unfall (1000) nach einem der Ansprüche 1 bis 4, wobei, wenn nach dem Senden der Informationen über die Verdächtige Person an das mobile Endgerät eine vorgegebene Zeit abgelaufen ist, das Steuermittel (110) eine Position des mobilen Endgeräts bestimmt, welches der verdächtigen Person am zweitnächsten ist, und die Informationen über die verdächtige Person an dieses mobile Endgerät sendet.

7. Digitales Sicherheitsverfahren zum Schutz vor Verlust/Unfall zum Verhindern einer Tat durch eine verdächtige Person durch Überwachen eines Videos, das von einer Überwachungskamera (11) aufgenommen wird, die so installiert ist, dass sie einen Observations-Zielbereich (200) abdeckt, der ein dem Personal vorbehaltener Bereich ist, wo ein unberechtigter Zugang verboten ist, umfassend:
Durchführen von Folgendem durch eine Überwachungsvorrichtung (100) :
einen Positionsinformations-Erlangungsschritt zum Erlangen von Positionsinformationen von mobilen Endgeräten, die von mehreren Angestellten jeweils durch den Observations-Zielbereich mit sich geführt werden;
einen Gesichtsbild-Speicherschritt zum Zusammenstellen eines Gesichtsbilds einer authentifizierten Person;
einen Gesichtsauthentifizierungs-Vergleichsschritt zum Vergleichen eines Gesichtsbilds einer Person, das von der Überwachungskamera (11) aufgenommen wird, mit dem Gesichtsbild, das in dem Gesichtsbild-Speicherschritt zusammengestellt wird; und
einen Steuerungsschritt zum, wenn ein Vergleichsergebnis durch das Gesichtsauthentifizierungs-Vergleichsschritt keine Übereinstimmung mit dem Gesichtsbild einer authentifizierten Person ist, Bestimmen derselben als eine verdächtige Person, Bestimmen einer Position des mobilen Endgeräts, das der verdächtigen Person am nächsten ist, auf der Grundlage der von dem Positionsinformations-Erlangungsmittel (113) erhaltenen Positionsinformationen und Senden von Informationen über die verdächtige Person an das mobile Endgerät (30); und wobei das mobile Endgerät Folgendes durchführt:
einen Antwortunfähigkeits-Einstellungsschritt des Vorab-Einstellens, nicht in der Lage zu sein, auf Informationen zu antworten, die von der Überwachungsvorrichtung (100) gesendet werden; und
wenn von der Antwortunfähigkeits-Einstellungseinheit die Antwortunfähigkeit eingestellt worden ist, einen Antwortunfähigkeits-Rückmeldeschritt des Zurücksendens einer Meldung der Antwortunfähigkeit, wenn die Sendung von Informationen von der Überwachungsvorrichtung (100) empfangen wird,
wobei
der Steuerungsschritt **dadurch gekennzeichnet ist, dass**, wenn von dem mobilen Endgerät eine Meldung einer Antwortunfähigkeit zurückgesendet wird, eine Position des mobilen Endgeräts bestimmt wird, das der verdächtigen Person am zweitnächsten ist, und die Informationen über die verdächtige Person an das zweitnächste mobile Endgerät gesendet werden, und
die Informationen über die verdächtige Person Informationen über eine Position der verdächtigen Person und eine Position des mobilen Endgeräts umfassen, an welches die Informationen gesendet worden sind, überlagert über den Observations-Zielbereich

8. Programm zum Bewirken, dass ein Computer fungiert als ein digitales Sicherheitssystem zum Schutz vor Verlust/Unfall (1000) zum Verhindern einer Tat durch eine verdächtige Person durch Überwachen eines Videos, das von einer Überwachungskamera (11) aufgenommen wird, die so installiert ist, dass sie einen Observations-Zielbereich abdeckt, der ein dem Personal vorbehaltener Bereich ist, wo ein unberechtigter Zugang verboten ist, wobei das System (1000) umfasst:
eine Überwachungsvorrichtung (100), umfassend:
Positionsinformations-Erlangungsmittel (113) zum Erlangen von Positionsinformationen von mobilen Endgeräten, die von mehreren Angestellten jeweils durch den Observations-Zielbereich mit sich geführt werden,
Gesichtsbild-Speichermittel (160) zum Zusammenstellen eines Gesichtsbilds einer authentifizierten Person;
Gesichtsauthentifizierungs-Vergleichsmittel (111) zum Vergleichen eines Gesichtsbilds einer Person, das von der Überwachungskamera (11) aufgenommen wird, mit dem Gesichtsbild, das in dem Gesichtsbild-Speichermittel (160) zusammengestellt wird, und
Steuermittel (110) zum, wenn ein Vergleichsergebnis durch das Gesichtsauthentifizierungs-Vergleichsmittel (111) keine Übereinstimmung mit dem Gesichtsbild einer authentifizierten Person ist, Bestimmen derselben als eine verdächtige Person, Bestimmen einer Position des mobilen Endgeräts, das der verdächtigen Person am nächsten ist, auf der Grundlage der von dem Positionsinformations-Erlangungsmittel (113) erhaltenen Positionsinformationen und Senden von Informationen über die verdächtige Person an das mobile Endgerät; und
wobei das mobile Endgerät eine Antwortunfähigkeits-Einstellungseinheit umfasst, welche vorab einstellt, nicht in der Lage zu sein, auf Informationen zu antworten, die von der Überwachungsvorrichtung (100) gesendet werden, und, wenn von der Antwortunfähigkeits-Einstellungseinheit die Antwortunfähigkeit eingestellt worden ist, eine Meldung der Antwortunfähigkeit zurücksendet, wenn die Sendung von Informationen von der Überwachungsvorrichtung (100) empfangen wird,
wobei
das Steuermittel (110) **dadurch gekennzeichnet ist, dass** es, wenn von dem mobilen Endgerät eine Meldung einer Antwortunfähigkeit zurückgesendet wird, eine Position des mobilen Endgeräts bestimmt, das der verdächtigen Person am zweitnächsten ist, und die Informationen über die verdächtige Person an das zweitnächste mobile Endgerät sendet, und
die Informationen über die verdächtige Person Informationen über eine Position der verdächtigen Person und eine Position des mobilen Endgeräts umfassen, an welches die Informationen gesendet worden sind, überlagert über den Observations-Zielbereich.

## Revendications

1. Système de défense contre une perte/un accident numérique (1000) pour empêcher une action par une personne suspecte en surveillant une vidéo prise par une caméra de surveillance (11) installée de manière à couvrir une zone cible de surveillance (200) qui est une zone réservée au personnel où une entrée non autorisée est interdite, comprenant :
un dispositif de surveillance (100) comprenant :
des moyens d'acquisition d'informations de position (113) pour acquérir les informations de position des dispositifs de terminaux mobiles (30) qui sont transportés par une pluralité d'employés respectivement dans toute la zone cible de surveillance (200) ;
des moyens de mémorisation d'image de visage (160) pour accumuler une image de visage d'une personne authentifiée ;
des moyens de collationnement d'authentification de visage (111) pour collationner une image de visage d'une personne prise par la caméra de surveillance (11) avec l'image de visage accumulée dans les moyens de mémorisation d'image de visage (160) ; et
des moyens de commande (110) pour, si un résultat d'un collationnement par les moyens de collationnement d'authentification de visage (111) est une non correspondance avec une image de visage d'une personne authentifiée, déterminer qu'il s'agit d'une personne suspecte, déterminer une position du dispositif de terminal mobile le plus proche de la personne suspecte sur la base des informations de position acquises par les moyens d'acquisition d'informations de position (113), et transmettre les informations concernant la personne suspecte audit dispositif de terminal mobile (30) ; et
ledit dispositif de terminal mobile (30) comprenant une unité d'établissement d'incapacité de répondre qui établit au préalable ne pas être capable de répondre aux informations transmises par ledit dispositif de surveillance (100) et renvoyant, lorsque l'incapacité de répondre a été établie par ladite unité d'établissement d'incapacité de répondre, une réponse de ladite incapacité de répondre si la transmission d'informations est reçue dudit dispositif de surveillance (100),
dans lequel
les moyens de commande (110) sont **caractérisés par**, si une réponse d'incapacité de répondre est renvoyée par le dispositif de terminal mobile (30), la détermination d'une position du dispositif de terminal mobile (30) le deuxième plus proche de la personne suspecte, et la transmission des informations concernant la personne suspecte audit deuxième dispositif de terminal mobile le plus proche (30), et
les informations concernant la personne suspecte comprennent des informations d'une position de la personne suspecte et d'une position du dispositif de terminal mobile (30) auquel les informations ont été transmises superposées sur la zone cible de surveillance.

2. Système de défense contre une perte/un accident numérique (1000) selon la revendication 1, dans lequel les moyens de mémorisation d'image de visage (160) accumulent en outre une image de visage d'une personne suspecte, et
si un résultat de collationnement par les moyens de collationnement d'authentification de visage (111) est une correspondance avec une image de visage d'une personne suspecte, les moyens de commande (110) transmettent les informations concernant la personne suspecte au dispositif de terminal mobile le plus proche de la personne suspecte.

3. Système de défense contre une perte/un accident numérique (1000) selon la revendication 1, comprenant un lecteur RFID installé dans la zone cible de surveillance et une carte d'authentification devant être authentifiée par le lecteur RFID, dans lequel
si l'authentification de la carte d'authentification possédée par une personne dans la zone cible de surveillance par le lecteur RFID n'est pas établie, les moyens de commande (110) déterminent qu'il s'agit d'une personne suspecte, et transmettent les informations concernant la personne suspecte au dispositif de terminal mobile le plus proche de la personne suspecte.

4. Système de défense contre une perte/un accident numérique (1000) selon l'une quelconque des revendications 1 à 3, dans lequel les moyens de commande (110) déterminent si une personne authentifiée dans la zone cible de surveillance obtient l'accès à un lieu spécifique dans la zone cible de surveillance ou à un instant spécifié précédemment, et
si la personne authentifiée n'est pas autorisée à accéder au lieu spécifique ou à l'instant spécifié, déterminent que la personne est une personne suspecte.

5. Système de défense contre une perte/un accident numérique (1000) selon l'une quelconque des revendications 1 à 3, comprenant un dispositif d'arrêt de véhicule qui limite le déplacement d'un véhicule, dans lequel
les moyens de commande (110) activent le dispositif d'arrêt de véhicule si un véhicule conduit par la personne suspecte tente de sortir de la zone cible de surveillance.

6. Système de défense contre une perte/un accident numérique (1000) selon l'une quelconque des revendications 1 à 4, dans lequel, si un temps prédéterminé s'est écoulé après la transmission des informations concernant la personne suspecte au dispositif de terminal mobile, les moyens de commande (110) déterminent une position du dispositif de terminal mobile le deuxième plus proche de la personne suspecte, et transmettent les informations concernant la personne suspecte audit dispositif de terminal mobile.

7. Procédé de défense contre une perte/un accident numérique pour empêcher une action par une personne suspecte en surveillant une vidéo prise par une caméra de surveillance (11) installée de manière à couvrir une zone cible de surveillance qui est une zone réservée au personnel où une entrée non autorisée est interdite, comprenant :
un dispositif de surveillance (100) effectuant :
une étape d'acquisition d'informations de position pour acquérir les informations de position des dispositifs de terminaux mobiles qui sont transportés par une pluralité d'employés respectivement dans toute la zone cible de surveillance ;
une étape de mémorisation d'image de visage pour accumuler une image de visage d'une personne authentifiée ;
une étape de collationnement d'authentification de visage pour collationner une image de visage d'une personne prise par la caméra de surveillance (11) avec l'image de visage accumulée à l'étape de mémorisation d'image de visage ; et
une étape de commande pour, si un résultat de collationnement à l'étape de collationnement d'authentification de visage est une non correspondance avec une image de visage d'une personne authentifiée, déterminer qu'il s'agit d'une personne suspecte, déterminer une position du dispositif de terminal mobile le plus proche de la personne suspecte sur la base des informations de position acquises par les moyens d'acquisition d'informations de position (113), et transmettre les informations concernant la personne suspecte audit dispositif de terminal mobile ; et ledit dispositif de terminal mobile effectuant :
une étape d'établissement d'incapacité de répondre pour établir au préalable ne pas être capable de répondre aux informations transmises par ledit dispositif de surveillance (100) ; et
une étape de réponse d'incapacité de répondre pour renvoyer, lorsque l'incapacité de répondre a été établie à ladite étape d'établissement d'incapacité de répondre, une réponse de ladite incapacité de répondre si la transmission d'informations est reçue dudit dispositif de surveillance (100),
dans lequel
l'étape de commande est **caractérisée par**, si une réponse d'incapacité de répondre est renvoyée par le dispositif de terminal mobile, la détermination d'une position du dispositif de terminal mobile le deuxième plus proche de la personne suspecte, et la transmission des informations concernant la personne suspecte audit deuxième dispositif de terminal mobile le plus proche, et
les informations concernant la personne suspecte comprennent des informations d'une position de la personne suspecte et d'une position du dispositif de terminal mobile auquel les informations ont été transmises superposées sur la zone cible de surveillance.

8. Programme pour amener un ordinateur à fonctionner en tant que
système de défense contre une perte/un accident numérique (1000) pour empêcher une action par une personne suspecte en surveillant une vidéo prise par une caméra de surveillance (11) installée de manière à couvrir une zone cible de surveillance qui est une zone réservée au personnel où une entrée non autorisée est interdite, le système (1000) comprenant :
un dispositif de surveillance (100) comprenant :
des moyens d'acquisition d'informations de position (113) pour acquérir les informations de position des dispositifs de terminaux mobiles respectivement transportés par une pluralité d'employés dans toute la zone cible de surveillance,
des moyens de mémorisation d'image de visage (160) pour accumuler une image de visage d'une personne authentifiée,
des moyens de collationnement d'authentification de visage (111) pour collationner une image de visage d'une personne prise par la caméra de surveillance (11) avec l'image de visage accumulée dans les moyens de mémorisation d'image de visage (160), et
des moyens de commande (110) pour, si un résultat de collationnement par les moyens de collationnement d'authentification de visage (111) est une non correspondance avec une image de visage d'une personne authentifiée, déterminer qu'il s'agit d'une personne suspecte, déterminer une position du dispositif de terminal mobile le plus proche de la personne suspecte sur la base des informations de position acquises par les moyens d'acquisition d'informations de position (113), et transmettre les informations concernant la personne suspecte audit dispositif de terminal mobile ; et
ledit dispositif de terminal mobile comprenant une unité d'établissement d'incapacité de répondre qui établit au préalable ne pas être capable de répondre aux informations transmises par ledit dispositif de surveillance (100) et renvoyant, lorsque l'incapacité de répondre a été établie par ladite unité d'établissement d'incapacité de répondre, une réponse de ladite incapacité de répondre si la transmission d'informations est reçue dudit dispositif de surveillance (100),
dans lequel
les moyens de commande (110) sont **caractérisés par**, si une réponse d'incapacité de répondre est renvoyée par le dispositif de terminal mobile, la détermination d'une position du dispositif de terminal mobile le deuxième plus proche de la personne suspecte, et la transmission des informations concernant la personne suspecte audit deuxième dispositif de terminal mobile le plus proche, et
les informations concernant la personne suspecte comprennent des informations d'une position de la personne suspecte et d'une position du dispositif de terminal mobile auquel les informations ont été transmises superposées sur la zone cible de surveillance.
